# EUROPEAN PATENT APPLICATION

(11) **EP 4 221 317 A1**
(43) Date of publication of application: **02.08.2023**
(21) Application number: 21882050.4
(22) Date of filing: 20.10.2021
(51) Int. Cl.: H04W 28/18

(54) **DRX DETERMINATION METHOD AND APPARATUS, TERMINALS AND READABLE STORAGE MEDIUM**

(30) Priority: 22.10.2020 CN 202011142484
(71) Applicant: Vivo Mobile Communication Co., Ltd., Dongguan, Guangdong 523863 (CN)
(72) Inventor: ZHENG, Qian, Dongguan, Guangdong 523863 (CN); YANG, Xiaodong, Dongguan, Guangdong 523863 (CN); JI, Zichao, Dongguan, Guangdong 523863 (CN)
(74) Representative: Murgitroyd & Company
(86) International application number: PCT/CN2021/124957
(87) International publication number: WO 2022/083635

(57) **Abstract**

This application discloses a DRX determining method and apparatus, a terminal, and a readable storage medium, and belongs to the field of communications technologies. The DRX determining method includes: transmitting, by a first terminal, first information to a second terminal, where the first information is used for indicating N sets of sidelink SL DRX configuration, and N is a positive integer; and receiving feedback information transmitted by the second terminal for the first information.

## Description

### CROSS-REFERENCE TO RELATED APPLICATION

This application claims priority to Chinese Patent Application No. 202011142484.5, filed in China on October 22, 2020, which is incorporated herein by reference in its entirety.

### TECHNICAL FIELD

This application belongs to the field of communications technologies, and specifically, relates to a DRX determining method and apparatus, a terminal, and a readable storage medium.

### BACKGROUND

A long term evolution (Long Term Evolution, LTE) system can support a sidelink (sidelink, SL), which is used for direct communication between terminals without a network side device. To reduce power consumption of a terminal, an SL discontinuous reception (Discontinuous Reception, DRX) mechanism may be introduced.

The SL DRX mechanism is similar to an existing Uu DRX mechanism. A main difference lies in different applications of DRX configuration. SL DRX configuration is used for transmitting/receiving between a pair of terminals, and a Uu DRX configuration is used for transmitting/receiving between a terminal and a network side device. In the conventional technology, the Uu DRX configuration is determined by the network side device. In a case that the Uu DRX mechanism is reused in the SL DRX mechanism, in view of problems that the terminal may operate beyond a coverage area of the network side device, the network side device does not sufficiently know service characteristics of SL communication, and the like, reliability of SL DRX configuration determined by the network side device is low.

### SUMMARY

Embodiments of this application provide a DRX determining method and apparatus, a terminal, and a readable storage medium, to implement negotiation upon on SL DRX configuration.

According to a first aspect, a DRX determining method is provided, performed by a first terminal, where the method includes:
transmitting first information to a second terminal, where the first information is used for indicating N sets of sidelink SL DRX configuration, and N is a positive integer; and
receiving feedback information transmitted by the second terminal for the first information.

According to a second aspect, a DRX determining method is provided, performed by a second terminal, where the method includes:
receiving first information transmitted by a first terminal, where the first information is used for indicating N sets of sidelink SL DRX configuration, and N is a positive integer; and
transmitting, to the first terminal, feedback information for the first information.

According to a third aspect, a DRX determining apparatus is provided, where the DRX determining apparatus includes:
a first transmitting module, configured to transmit first information to a second terminal, where the first information is used for indicating N sets of sidelink SL DRX configuration, and N is a positive integer; and
a first receiving module, configured to receive feedback information transmitted by the second terminal for the first information.

According to a fourth aspect, a DRX determining apparatus is provided, where the DRX determining apparatus includes:
a second receiving module, configured to receive first information transmitted by a first terminal, where the first information is used for indicating N sets of sidelink SL DRX configuration, and N is a positive integer; and
a second transmitting module, configured to transmit, to the first terminal, feedback information for the first information.

According to a fifth aspect, a terminal is provided, where the terminal includes a processor, a memory, and a program or instructions stored in the memory and executable on the processor, and when the program or the instructions are executed by the processor, the steps of the method according to the first aspect are implemented, or the steps of the method according to the second aspect are implemented.

According to a sixth aspect, a readable storage medium is provided, where the readable storage medium stores a program or instructions, and when the program or the instructions are executed by a processor, the steps of the method according to the first aspect are implemented, or the steps of the method according to the second aspect are implemented.

According to a seventh aspect, a chip is provided, where the chip includes a processor and a communications interface, the communications interface is coupled to the processor, and the processor is configured to run a program or instructions for a network side device, to implement the method according to the first aspect, or implement the method according to the second aspect.

According to an eighth aspect, a program product is provided, where the program product is stored in a non-volatile storage medium, and the program product is executed by at least one processor to implement the method according to the first aspect, or implement the method according to the second aspect.

In the embodiments of this application, the first terminal may indicate, to the second terminal, the N sets of SL DRX configuration suggested by the first terminal, so that the second terminal determines whether to accept the SL DRX configuration suggested by the first terminal, and performs corresponding feedback. It can be learned that, in the embodiments of this application, the first terminal and the second terminal for SL communication can autonomously negotiate upon and determine an appropriate SL DRX configuration. In this way, the determined SL DRX configuration better conforms to service characteristics of SL communication, thereby improving reliability of the determined SL DRX configuration.

### BRIEF DESCRIPTION OF THE DRAWINGS

FIG. 1 is a block diagram of a wireless communications system to which an embodiment of this application is applicable;
FIG. 2 is a schematic diagram of a DRX cycle according to an embodiment of this application;
FIG. 3 is a first flowchart of a DRX determining method according to an embodiment of this application;
FIG. 4 is a second flowchart of a DRX determining method according to an embodiment of this application;
FIG. 5a is a first schematic diagram of a PC5 unicast link establishment process according to an embodiment of this application;
FIG. 5b is a second schematic diagram of a PC5 unicast link establishment process according to an embodiment of this application;
FIG. 5c is a third schematic diagram of a PC5 unicast link establishment process according to an embodiment of this application;
FIG. 6a is a first schematic diagram of a PC5 unicast link modification process according to an embodiment of this application;
FIG. 6b is a second schematic diagram of a PC5 unicast link modification process according to an embodiment of this application;
FIG. 6c is a third schematic diagram of a PC5 unicast link modification process according to an embodiment of this application;
FIG. 7a is a first schematic diagram of a PC5 RRC reconfiguration process according to an embodiment of this application;
FIG. 7b is a second schematic diagram of a PC5 RRC reconfiguration process according to an embodiment of this application;
FIG. 7c is a third schematic diagram of a PC5 RRC reconfiguration process according to an embodiment of this application;
FIG. 8a is a first schematic diagram of a PC5-S or PC5 RRC process according to an embodiment of this application;
FIG. 8b is a second schematic diagram of a PC5-S or PC5 RRC process according to an embodiment of this application;
FIG. 8c is a third schematic diagram of a PC5-S or PC5 RRC process according to an embodiment of this application;
FIG. 9 is a first structural diagram of a DRX determining apparatus according to an embodiment of this application;
FIG. 10 is a second structural diagram of a DRX determining apparatus according to an embodiment of this application;
FIG. 11 is a first structural diagram of a terminal according to an embodiment of this application; and
FIG. 12 is a second structural diagram of a terminal according to an embodiment of this application.

### DETAILED DESCRIPTION

The following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects instead of describing a specific order or sequence. It should be understood that the data used in this way is interchangeable in appropriate circumstances, so that the embodiments of this application can be implemented in other orders than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

It should be noted that the technologies described in the embodiments of this application are not limited to a long term evolution (Long Term Evolution, LTE)/LTE-advanced (LTE-Advanced, LTE-A) system, and may be further used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used in the aforementioned systems and radio technologies, and may also be used in other systems and radio technologies. However, in the following descriptions, a new radio (New Radio, NR) system is described for an illustration purpose, and NR terms are used in most of the following descriptions. These technologies may also be applied to applications other than an NR system application, for example, a 6th generation (6th Generation, 6G) communications system.

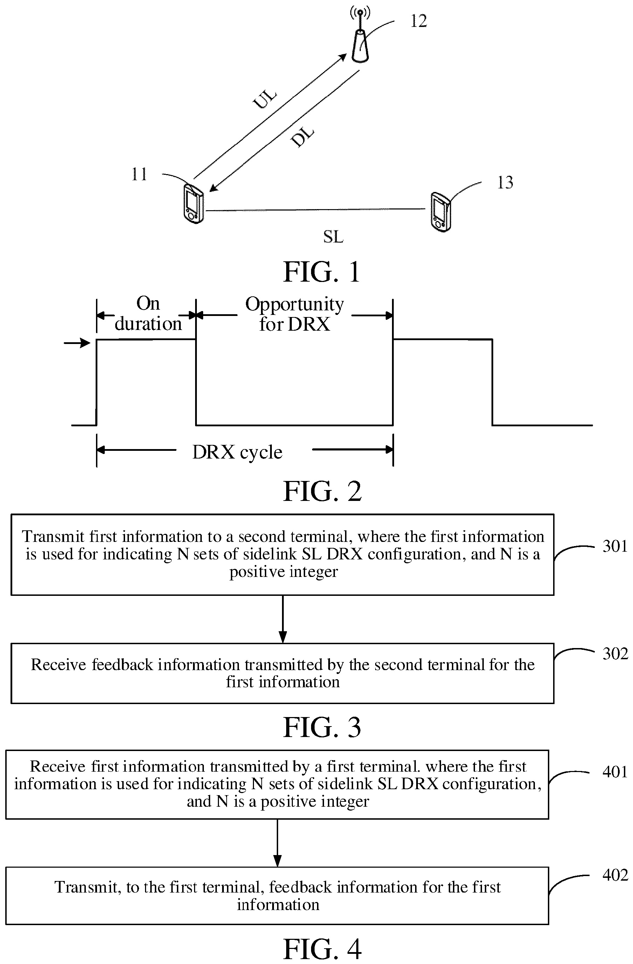

FIG. 1 is a block diagram of a wireless communications system to which an embodiment of this application is applicable. The wireless communications system includes a terminal 11, a network side device 12, and a second terminal 13. The network side device 12 may communicate with each of the first terminal 11 and the second terminal 13, and the first terminal 11 may communicate with the second terminal 12.

In actual application, as shown in FIG. 1, the terminal may transmit information to the network side device in uplink (UpLink, UL), and the network side device may transmit information to the terminal in downlink (DownLink, DL). The first terminal 11 may directly communicate with the second terminal 13 through a sidelink (Sidelink, SL), that is, the first terminal 11 may communicate with the second terminal 13 without the network side device 12. The sidelink may also be referred to as a side link, a side-link, a secondary link, or the like.

In this embodiment of this application, in an implementation, the first terminal may be a transmitting terminal for SL communication, and the second terminal may be a receiving terminal for SL communication. In another implementation, the first terminal may be a receiving terminal for SL communication, and the second terminal may be a transmitting terminal for SL communication. This may be specifically determined based on an actual situation. This is not limited in this embodiment of this application.

The terminal may also be referred to as a terminal device or user equipment (User Equipment, UE). In actual application, the terminal may be a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), pedestrian user equipment (PUE), or the like. The wearable device includes a band, a headset, glasses, or the like. The network side device may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term.

For ease of understanding, the following describes some content included in the embodiments of this application.

### 1. Sidelink

A long term evolution (Long Term Evolution, LTE) system can support a sidelink. The sidelink is used for direct data transmission between terminals without a network side device.

The LTE sidelink design is applicable to specific public safety affairs (for example, emergency communication at a fire site or a disaster site such as an earthquake), vehicle to everything (Vehicle to Everything, V2X) communication, and the like. The vehicle to everything communication includes various services, for example, basic security communication, advanced driving (self-driving), platooning, and sensor extension. The LTE sidelink supports only broadcast communication. Therefore, the LTE sidelink is mainly used for basic security communication, and other advanced V2X services that have strict quality of service (Quality of Service, QoS) requirements in aspects such as a delay and reliability are supported through a 5th-generation (5-th-Generation, 5G) new radio (New Radio, NR) sidelink.

### 2. Sidelink transmission mode

Sidelink transmission may include several transmission modes: broadcast (Broadcast), groupcast (Groupcast), and unicast (Unicast). The unicast, as the name implies, is one-to-one (One to One) transmission. Both the groupcast and the broadcast are one-to-many transmissions, but the broadcast does not have a concept that UEs belong to the same group. The sidelink unicast and groupcast communication supports a physical layer hybrid automatic repeat request (Hybrid Automatic Repeat Request, HARQ) feedback mechanism.

### 3. Resource allocation mode (Mode)

Sidelink resource allocation modes may include the following two categories:
(1) Mode 1: A base station (Base Station, BS) schedules an SL resource to be used by UE for SL transmission (BS schedules SL resource(s) to be used by UE for SL transmission(s)). In this mode, a network side device (for example, the base station) controls each UE and allocates a resource to each UE. Therefore, this mode may also be referred to as a base station scheduling mode.
(2) Mode 2: UE determines (that is, a BS does not perform scheduling) an SL transmission resource in SL resources configured by the BS or a network (Network) or preconfigured SL resources (UE determines, i.e. BS does not schedule, SL transmission resource(s) within SL resources configured by BS/network or preconfigured SL resources). In this mode, each UE autonomously selects a resource. Therefore, this mode may also be referred to as a UE autonomous mode.

### 4. Uu air interface discontinuous reception (Discontinuous Reception, DRX), referred to as Uu DRX for short

A DRX mechanism is introduced in both LTE and NR. In the DRX mechanism, a DRX active time (DRX on) and a DRX inactive time (DRX off) of DRX are configured to save power for UE.

During an on duration of a DRX cycle, the UE monitors a physical downlink control channel (Physical Downlink Control Channel, PDCCH) (UE shall monitor PDCCH).

During the on duration of the DRX cycle, in a case that no PDCCH is detected, that is, no scheduling is performed, after the on duration, the UE enters an off duration of the DRX cycle, which is also referred to as an opportunity for DRX (Opportunity for DRX). In this case, DRX active time duration of the DRX is the on duration of the DRX. The DRX may be referred to as enabled DRX. For example, assuming that the on duration of the DRX includes 10 slots (slot), the DRX active time duration of the DRX includes 10 slots. For ease of understanding, refer to FIG. 2. In FIG. 2, an on duration of a DRX cycle is a DRX active time.

During an on duration of a DRX cycle, in a case that a PDCCH is detected in a slot, that is, after the PDCCH is scheduled and receives data in a slot, the PDCCH is quite likely to continue to be scheduled in the following several slots. Therefore, each time the UE is scheduled to initially transmit data, a drx-InactivityTimer timer is started or restarted, and the UE stays in an active state until the timer expires. In this case, DRX active time duration of the DRX is jointly determined by an on duration of the DRX, a running duration of the drx-InactivityTimer, and a scheduling time point. The DRX may be referred to as active DRX. For example, assuming that the on duration of the DRX includes 10 slots, a scheduling time point is the 6th slot among the 10 slots, and the running duration of the drx-InactivityTimer is 10 slots, the DRX active time duration of the DRX includes 15 slots.

During DRX configuration, an on duration timer (onDurationTimer), a DRX inactivity timer (drx-InactivityTimer), a DRX retransmission timer (drx-RetransmissionTimer), and a long DRX cycle start offset (longDRX-CycleStartOffset) are configured.

After DRX is configured for the UE, in a case that decoding fails during data transmission or reception, the UE needs to enter an on time to monitor a control channel and wait for retransmission scheduled by the network.

For downlink data reception, the UE starts a downlink retransmission timer (HARQ round trip time (Round Trip Time, RTT) timer) for a corresponding HARQ process after receiving downlink data transmission indicated by the PDCCH and feeding back HARQ information. In a case that data of the HARQ process data is not successfully decoded after the HARQ RTT Timer expires, the UE starts a retransmission timer (drx-RetransmissionTimer), monitors the PDCCH, and waits for transmission.

For uplink data transmission, the UE starts an uplink backhaul timer HARQ RTT Timer for a corresponding HARQ process after receiving uplink data transmission indicated by the PDCCH. After the HARQ RTT Timer expires, the UE starts a retransmission timer (drx-ULRetransmissionTimer) and enters an active state to monitor the PDCCH and wait for transmission scheduled by the network.

FIG. 3 is a first flowchart of a DRX determining method according to an embodiment of this application. The DRX determining method shown in FIG. 3 may be performed by a first terminal.

As shown in FIG. 3, the DRX determining method may include the following steps:
Step 301: Transmit first information to a second terminal, where the first information is used for indicating N sets of sidelink SL DRX configuration, and N is a positive integer.

During specific implementation, in a first implementation, the N sets of SL DRX configuration may be SL DRX configuration generated by the first terminal. In a second implementation, the N sets of SL DRX configuration may be SL DRX configuration selected from SL DRX configuration that are obtained in advance by the first terminal. The at least one set of SL DRX configuration may be configured by a network side device, preconfigured, configured by a V2X layer, or specified in a protocol. This may be determined based on an actual situation. This is not limited in this embodiment of this application.

Optionally, the SL DRX configuration includes at least one of the following items of SL DRX: a cycle, an offset relative to a target reference time point, an on duration, a running duration of an inactivity timer, a running duration of a round-trip time RTT timer related to a hybrid automatic repeat request HARQ process, and a running duration of a retransmission timer.

The target reference time point is a reference time point at which the SL DRX configuration takes effect. During specific implementation, the target reference point may be determined by the first terminal, configured by the network side device, preconfigured, configured by a V2X layer, or specified in a protocol. This may be determined based on an actual situation. This is not limited in this embodiment of this application. It should be noted that specific parameters included in different SL DRX configuration may be the same or different, and the number of parameters included in different SL DRX configuration may be the same or different. This may be specifically determined based on an actual situation. This is not limited in this embodiment of the present disclosure.

Step 302: Receive feedback information transmitted by the second terminal for the first information.

In this embodiment of this application, after obtaining the N sets of SL DRX configuration suggested by the first terminal, the second terminal may determine whether to accept the SL DRX configuration, and perform corresponding feedback.

During specific implementation, that the second terminal determines whether to accept the N sets of SL DRX configuration may include any one of the following: (1) accepting at least one set of SL DRX configuration in the N sets of SL DRX configuration; (2) accepting only some parameters of at least one SL DRX configuration in the N sets of SL DRX configuration; (3) rejecting the N sets of SL DRX configuration.

In the case of (1), the second terminal may indicate, by using the feedback information, SL DRX configuration accepted by the second terminal. After receiving the feedback information, the first terminal may determine a target SL DRX configuration in the SL DRX configuration accepted by the second terminal, and perform SL DRX communication with the second terminal by using the target SL DRX configuration.

In the case of (2), the second terminal may indicate, by using the feedback information, a first parameter of SL DRX configuration accepted by the second terminal, where the first parameter may be a parameter accepted by the second terminal, or a parameter rejected and modified by the second terminal.

In a case that the first parameter is a parameter accepted by the second terminal, after receiving the feedback information, the first terminal may re-suggest the first parameter to the second terminal. A specific processing process is the same as that of suggesting the SL DRX configuration to the second terminal. A main difference between the two processes lies in that suggested objects in the two processes are different. Therefore, for the specific processing process of re-suggesting the first parameter to the second terminal, refer to the processing process of suggesting the SL DRX configuration to the second terminal. Details are not described herein again.

In a case that the first parameter is a parameter rejected and modified by the second terminal, the first terminal may determine whether to accept the first parameter after receiving the feedback information. In a case that the first parameter is accepted, a target SL DRX configuration in SL DRX configuration accepted by both the first terminal and the second terminal may be determined, and SL DRX communication is performed with the second terminal by using the target SL DRX configuration. In a case that the first parameter is rejected, renegotiation upon SL DRX configuration may be performed with the second terminal; or a direct link between the first terminal and the second terminal is set to a DRX inactive state, that is, in the case of data transmission/reception, the direct link is in a continuous transmission/reception state, but not in a DRX state; or a direct link between the first terminal and the second terminal is released.

In the case of (3), the second terminal may indicate, by using the feedback information, that the second terminal rejects the N sets of SL DRX configuration. Further, the second terminal may further indicate, by using the feedback information, SL DRX configuration suggested by the second terminal.

In a case that the feedback information does not indicate SL DRX configuration suggested by the second terminal, after receiving the feedback information, the first terminal may renegotiate with the second terminal upon an SL DRX configuration; or set a direct link between the first terminal and the second terminal to a DRX inactive state, that is, in the case of data transmission/reception, the direct link is in a continuous transmission/reception state, but not in a DRX state; or release a direct link between the first terminal and the second terminal.

In a case that the feedback information indicates SL DRX configuration suggested by the second terminal, after receiving the feedback information, the first terminal may determine whether to accept the SL DRX configuration suggested by the second terminal. In a case that the SL DRX configuration is accepted, a target SL DRX configuration in SL DRX configuration accepted by both the first terminal and the second terminal may be determined, and SL DRX communication is performed with the second terminal by using the target SL DRX configuration. In a case that the SL DRX configuration is rejected, renegotiation upon SL DRX configuration may be performed with the second terminal; or a direct link between the first terminal and the second terminal is set to a DRX inactive state, that is, in the case of data transmission/reception, the direct link is in a continuous transmission/reception state, but not in a DRX state; or a direct link between the first terminal and the second terminal is released.

In the DRX determining method in this embodiment of this application, the first terminal may indicate, to the second terminal, the N sets of SL DRX configuration suggested by the first terminal, so that the second terminal determines whether to accept the SL DRX configuration suggested by the first terminal, and performs corresponding feedback. It can be learned that, in this embodiment of this application, the first terminal and the second terminal for SL communication can autonomously negotiate upon and determine an appropriate SL DRX configuration. In this way, the determined SL DRX configuration better conforms to service characteristics of SL communication, thereby improving reliability of the determined SL DRX configuration.

### 1. The first information in this embodiment of this application is described below:

Optionally, the first information includes at least one of the following: the N sets of SL DRX configuration, and N index values, where the N index values and the N sets of SL DRX configuration are in a one-to-one correspondence. That is, the first information may indicate the N sets of SL DRX configuration by carrying at least one of the N sets of SL DRX configuration and the N index values.

It can be learned from the foregoing content that, in a first implementation, the N sets of SL DRX configuration may be generated by the first terminal; and in a second implementation, the N sets of SL DRX configuration may be selected by the first terminal. For the N sets of SL DRX configuration determined in different implementations, the first information may indicate the N sets of SL DRX configuration in different manners. Details are described below:

For the N sets of SL DRX configuration determined in the first implementation, the first information includes at least the N sets of SL DRX configuration. In this way, the second terminal can obtain the N sets of SL DRX configuration after receiving the first information. Further, the first information may further include the N index values. In this way, in a case that the second terminal accepts some or all parameters of at least one set of SL DRX configuration in the N SL DRX configuration, the second terminal can directly return an index value to indicate SL DRX configuration accepted by the second terminal, thereby reducing signaling overheads.

For the N sets of SL DRX configuration determined in the second implementation, because the second terminal can obtain SL DRX configuration in the same manner, the first information may include only the N index values, to reduce signaling overheads.

Optionally, the first information further includes N feature information groups, and the N feature information groups and the N sets of SL DRX configuration are in a one-to-one correspondence.

During specific implementation, a feature information group corresponding to SL DRX configuration may be used for the second terminal to determine whether to accept the SL DRX configuration, or whether to modify some parameters of the SL DRX configuration.

Optionally, the feature information group includes at least one of the following: SL DRX configuration priority (priority), quality of service (Quality of Service, QoS), a logical channel (Logical Channel, LC) identifier (ID), a logical channel priority, a bearer (bearer) identifier, a bearer priority, a QoS flow identifier, an application identifier (application ID), a service identifier (service identifier), a source address layer 2 identifier (source L2 ID), and a destination address layer 2 identifier (destination L2 ID).

During specific implementation, the QoS may include parameters such as a priority, a delay, and reliability of a data packet or a data stream. The SL DRX configuration priority of the SL DRX configuration may be used for at least one of the following: determining whether a parameter of the SL DRX configuration is allowed to be modified, for example, SL DRX configuration is allowed to be modified only in a case that an SL DRX configuration priority of the SL DRX configuration is less than a preset SL DRX configuration priority, or otherwise, the SL DRX configuration is not allowed to be modified; and determining the target SL DRX configuration, for example, in a case that the first terminal and the second terminal perform negotiation and determine that there are a plurality of SL DRX configuration, SL DRX configuration with the highest priority among the plurality of SL DRX configuration may be selected as the target SL DRX configuration, and the SL DRX configuration is used for SL DRX communication.

The feature information group may be configured by the network side device, preconfigured, configured by a V2X layer, or specified in a protocol. This may be determined based on an actual situation. This is not limited in this embodiment of this application. It should be noted that specific parameters included in feature information groups of different SL DRX configuration may be the same or different, and the number of parameters included in feature information groups of different SL DRX configuration may be the same or different. This may be specifically determined based on an actual situation. This is not limited in this embodiment of the present disclosure.

Optionally, the first information may be carried in any one of the following: a direct link establishment request message, a direct link modification request message, a direct link radio resource control RRC reconfiguration message, and an SL DRX configuration request message.

During specific implementation, the first terminal and the second terminal may negotiate upon SL DRX configuration through different processes, and the first information may be carried in different messages during SL DRX configuration negotiation in different processes. Details are described below:
Manner 1: The first terminal may reuse an existing process, for example, a PCS unicast link establishment process, a PCS unicast link modification process, or a PCS RRC reconfiguration process, for negotiating upon SL DRX configuration, so as to reduce signaling overheads.

Specifically, in a case that the SL DRX configuration negotiation occurs in the PCS unicast link establishment process, the first information may be carried in a direct link establishment request message. In a case that the SL DRX configuration negotiation occurs in the PCS unicast link modification process, the first information may be carried in a direct link modification request message. In a case that the SL DRX configuration negotiation occurs in the PCS RRC reconfiguration process, the first information may be carried in a direct link RRC reconfiguration message.

Manner 2: A new process dedicated for SL DRX configuration negotiation, for example, PC5-signaling (Signaling, S) or a PCS RRC process, may be introduced. In this way, the SL DRX configuration negotiation can be decoupled from other processes and can occur independently from other processes, thereby improving flexibility of the SL DRX configuration negotiation.

In a case that the SL DRX configuration negotiation occurs in the newly introduced process, the first information may be carried in an SL DRX configuration request message.

### 2. The feedback information in this embodiment of this application is described below:

(1) Optionally, the feedback information includes any one of the following:
   M index values;
   M index values, and a first parameter in first SL DRX configuration; or
   K sets of SL DRX configuration, where
   the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

### Details are described below:

In a case that the feedback information includes the M index values, it indicates that the second terminal accepts the M sets of SL DRX configuration that are associated with the M index values and that are suggested by the first terminal.

In a case that the feedback information includes the M index values and the first parameter in the first SL DRX configuration, it indicates that the second terminal accepts at least some parameters of at least one set of SL DRX configuration suggested by the first terminal, where the at least one set of SL DRX configuration is SL DRX configuration in the M sets of SL DRX configuration associated with the M index values.

In this case, optionally, the first parameter may be any one of the following: a parameter that is in the first SL DRX configuration and that is accepted by the second terminal, or a parameter that is in the first SL DRX configuration and that is modified by the second terminal.

In a case that the feedback information includes the K sets of SL DRX configuration, optionally, the K sets of SL DRX configuration meet any one of the following:
(a) that the K sets of SL DRX configuration are SL DRX configuration in the N sets of SL DRX configuration;
(b) that the K sets of SL DRX configuration are obtained by the second terminal by modifying SL DRX configuration in the N sets; or
(c) that the K sets of SL DRX configuration are SL DRX configuration other than the N sets of SL DRX configuration.

In a case that the K sets of SL DRX configuration meet (a), it indicates that the second terminal accepts the K sets of SL DRX configuration suggested by the first terminal.

In a case that the K sets of SL DRX configuration meet (b), it indicates that the second terminal accepts some suggestions of the first terminal, and gives a suggestion on a part not accepted by the second terminal.

In a case that the K sets of SL DRX configuration meet (b), it indicates that the second terminal rejects a suggestion of the first terminal and gives a suggestion.

For the feedback information in (1), optionally, the feedback information may be carried in any one of the following: a direct link establishment accept message, a direct link modification accept message, a direct link RRC reconfiguration complete message, or an SL DRX configuration response message.

It may be understood that a manner of carrying the feedback information is related to a manner of carrying the first information. In a case that the first information is carried in a direct link establishment request message, the feedback information may be carried in a direct link establishment accept message. In a case that the first information is carried in a direct link modification request message, the feedback information may be carried in a direct link modification accept message. In a case that the first information is carried in a direct link RRC reconfiguration message, the feedback information may be carried in a direct link RRC reconfiguration complete message. In a case that the first information is carried in an SL DRX configuration request message, the feedback information may be carried in an SL DRX configuration response message.

For the feedback information in (1), optionally, in a case that the feedback information meets a first condition, after the receiving feedback information transmitted by the second terminal for the first information, the method further includes:
performing a first operation in a case that the first terminal rejects the feedback information, where
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration; and
   the first operation includes any one of the following:
      transmitting second information to the second terminal, where the second information is used for indicating that SL DRX configuration negotiation between the first terminal and the second terminal fails;
      setting a direct link to a DRX inactive state; or
      triggering SL DRX configuration renegotiation between the first terminal and the second terminal.

In this optional implementation, that the feedback information meets the first condition indicates that the feedback information gives a suggestion of the second terminal. In this case, it can be learned from the foregoing content that, after receiving the feedback information, the first terminal may determine whether to accept the suggestion of the second terminal. The first operation may be performed in a case that the suggestion of the second terminal is rejected, that is, the feedback information is rejected.

Optionally, the second information is carried in a direct link release request message. In this case, a cause of triggering transmission of the direct link release request message is that SL DRX configuration negotiation between the first terminal and the second terminal fails.

The setting a direct link to a DRX inactive state may be understood as setting a direct link between the first terminal and the second terminal to a DRX inactive state, that is, stopping transmitting and receiving data between the first terminal and the second terminal in a DRX mode. In a case that data is transmitted/received between the first terminal and the second terminal, the data is in a continuous transmission/reception state.

It should be noted that, in a case that step 301 and step 302 occur in a PCS unicast link establishment process and the feedback information is carried in a direct link establishment accept message, it indicates that a direct link connection has been established between the first terminal and the second terminal. Therefore, in a case that the first operation includes triggering SL DRX configuration renegotiation between the first terminal and the second terminal, the first terminal may perform SL DRX configuration renegotiation through another process, for example, a PCS unicast link modification process, a PCS RRC reconfiguration process, or a PCS-S or PCS RRC process.

In a case that step 301 and step 302 occur in a process other than the PCS unicast link establishment process, it indicates that a direct link connection has been established between the first terminal and said second terminal. Therefore, in a case that the first operation includes triggering an SL DRX configuration renegotiation between the first terminal and the second terminal, the first terminal may perform SL DRX configuration renegotiation through the same process or different processes. This may be specifically determined based on an actual situation. This is not limited in this embodiment of this application.

(2) Optionally, the feedback information indicates rejection of the N sets of SL DRX configuration.

The feedback information in (1) indicates that the second terminal rejects a suggestion of the first terminal and does not give a suggest.

Optionally, the feedback information may be carried in any one of the following: a direct link establishment reject message, a direct link modification reject message, a direct link RRC reconfiguration failure message, or an SL DRX configuration reject message.

It may be understood that a manner of carrying the feedback information is related to a manner of carrying the first information. In a case that the first information is carried in a direct link establishment request message, the feedback information may be carried in a direct link establishment reject message. In a case that the first information is carried in a direct link modification request message, the feedback information may be carried in a direct link modification reject message. In a case that the first information is carried in a direct link RRC reconfiguration message, the feedback information may be carried in a direct link RRC reconfiguration failure message. In a case that the first information is carried in an SL DRX configuration request message, the feedback information may be carried in an SL DRX configuration reject message.

Optionally, after the receiving feedback information transmitted by the second terminal for the first information, the method further includes:
performing a second operation, where
the second operation includes any one of the following:
   transmitting second information to the second terminal, where the second information is used for indicating that SL DRX configuration negotiation between the first terminal and the second terminal fails;
   setting a direct link to a DRX inactive state; or
   triggering SL DRX configuration renegotiation between the first terminal and the second terminal.

Optionally, the second information is carried in a direct link release request message. In this case, a cause of triggering transmission of the direct link release request message is that SL DRX configuration negotiation between the first terminal and the second terminal fails. For the setting a direct link to a DRX inactive state, refer to the foregoing descriptions. Details are not described herein again.

It should be noted that, in a case that step 301 and step 302 occur in a PCS unicast link establishment process and the feedback information is carried in a direct link establishment reject message, it indicates that no direct link connection has been established between the first terminal and the second terminal. Therefore, in this case, the second operation may not include transmitting second information to the second terminal.

In this optional implementation, the SL DRX configuration renegotiation may be the same or different from that in the process to which step 301 and step 302 belong. This may be specifically determined based on an actual situation. This is not limited in this embodiment of this application.

In this embodiment of this application, the terminal may obtain third information in advance. The third information is used for indicating at least one of the following: an upper threshold of SL DRX active time duration, and a lower threshold of SL DRX active time duration.

During specific implementation, the upper threshold and/or the lower threshold may be configured by a network side device, preconfigured, configured by a V2X layer, or specified in a protocol. This may be determined based on an actual situation. This is not limited in this embodiment of this application.

During specific implementation, the upper threshold and/or the lower threshold may be used for at least one of the following: that the terminal determines SL DRX active time duration suggested by the terminal, and that the terminal determines whether to accept SL DRX active time duration suggested by another terminal. Details are described below:

Optionally, before the transmitting first information to a second terminal, the method further includes:
determining the N sets of SL DRX configuration based on third information, where the third information is used for indicating at least one of the following: an upper threshold of SL DRX active time duration, and a lower threshold of SL DRX active time duration.

In this optional implementation, the upper threshold and/or the lower threshold are used for the first terminal to determine the N sets of SL DRX configuration.

In this optional implementation, SL DRX active time duration included in the N sets of SL DRX configuration may meet at least one of the following: being less than or equal to the upper threshold; and being greater than or equal to the lower threshold. Certainly, it may be understood that, in another implementation, the SL DRX active time duration included in the N sets of SL DRX configuration may be greater than the upper threshold or less than the lower threshold. This may be determined based on an actual situation. This is not limited in this embodiment of this application.

Optionally, in a case that the feedback information meets a first condition, after the receiving feedback information transmitted by the second terminal for the first information, the method further includes:
determining, based on third information, whether the feedback information is to be accepted, where the third information is used for indicating at least one of the following: an upper threshold of SL DRX active time duration, and a lower threshold of SL DRX active time duration, where
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration.

In this optional implementation, the upper threshold and/or the lower threshold may be used for the first terminal to determine whether to accept SL DRX active time duration suggested by the second terminal.

During specific implementation, for the upper threshold, in a case that SL DRX active time duration indicated in the feedback information is greater than the upper threshold, the first terminal may reject the suggestion; or in a case that SL DRX active time duration indicated in the feedback information is less than or equal to the upper threshold, the first terminal may accept the suggestion. This can prevent SL DRX active time duration on which negotiation succeeds from being excessively long, to reduce power consumption of the terminals.

For the lower threshold, in a case that SL DRX active time duration indicated in the feedback information is less than the lower threshold, the first terminal may accept the configuration. This can prevent the first terminal from frequently triggering renegotiation.

FIG. 4 is a second flowchart of a DRX determining method according to an embodiment of this application. The DRX determining method shown in FIG. 4 is performed by a network side device.

As shown in FIG. 4, the DRX determining method may include the following steps:
Step 401: Receive first information transmitted by a first terminal, where the first information is used for indicating N sets of sidelink SL DRX configuration, and N is a positive integer.
Step 402: Transmit, to the first terminal, feedback information for the first information.

In the DRX determining method in this embodiment of this application, after receiving the N sets of SL DRX configuration suggested by the first terminal, the second terminal may determine whether to accept the SL DRX configuration suggested by the first terminal, and perform corresponding feedback. It can be learned that, in the embodiments of this application, the first terminal and the second terminal for SL communication can autonomously negotiate upon and determine an appropriate SL DRX configuration. In this way, the determined SL DRX configuration better conforms to service characteristics of SL communication, thereby improving reliability of the determined SL DRX configuration.

Optionally, the first information includes at least one of the following: the N sets of SL DRX configuration, and N index values, where the N index values and the N sets of SL DRX configuration are in a one-to-one correspondence.

Optionally, the first information further includes N feature information groups, and the N feature information groups and the N sets of SL DRX configuration are in a one-to-one correspondence.

Optionally, the feature information group includes at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

Optionally, the SL DRX configuration includes at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, where the target reference time point is a reference time point at which the SL DRX configuration takes effect.

Optionally, the first information is carried in any one of the following: a direct link establishment request message, a direct link modification request message, a direct link radio resource control RRC reconfiguration message, and an SL DRX configuration request message.

Optionally, the feedback information includes any one of the following:
M index values;
M index values, and a first parameter in first SL DRX configuration; or
K sets of SL DRX configuration, where
the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

Optionally, the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

Optionally, the first parameter is any one of the following: a parameter that is in the first SL DRX configuration and that is accepted by the second terminal, or a parameter that is in the first SL DRX configuration and that is modified by the second terminal.

Optionally, the feedback information is carried in any one of the following: a direct link establishment accept message, a direct link modification accept message, a direct link RRC reconfiguration complete message, or an SL DRX configuration response message.

Optionally, in a case that the feedback information meets a first condition, after the transmitting, to the first terminal, feedback information for the first information, the method further includes:
receiving second information transmitted by the first terminal, where the second information is used for indicating that SL DRX configuration negotiation between the first terminal and the second terminal fails;
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration.

Optionally, the feedback information indicates rejection of the N sets of SL DRX configuration.

Optionally, the feedback information is carried in any one of the following: a direct link establishment reject message, a direct link modification reject message, a direct link RRC reconfiguration failure message, or an SL DRX configuration reject message.

Optionally, after the transmitting, to the first terminal, feedback information for the first information, the method further includes:
receiving second information transmitted by the first terminal, where the second information is used for indicating that SL DRX configuration negotiation between the first terminal and the second terminal fails.

Optionally, the second information is carried in a direct link release request message.

Optionally, before the transmitting, to the first terminal, feedback information for the first information, the method further includes:
generating the feedback information based on third information, where the third information is used for indicating at least one of the following: an upper threshold of SL DRX active time duration, and a lower threshold of SL DRX active time duration.

In this optional implementation, the upper threshold and/or the lower threshold may be used for the second terminal to determine whether to accept SL DRX active time duration suggested by the first terminal.

During specific implementation, for the upper threshold, in a case that SL DRX active time duration indicated in the first information is greater than the upper threshold, the second terminal may reject the suggestion; or in a case that SL DRX active time duration indicated in the first information is less than or equal to the upper threshold, the second terminal may accept the suggestion or recommend SL DRX active time duration. This can prevent SL DRX active time duration on which negotiation succeeds from being excessively long, to reduce power consumption of the terminals.

For the lower threshold, in a case that SL DRX active time duration indicated in the first information is less than the lower threshold, the second terminal may accept the configuration, not reject the configuration, not start or activate new SL DRX, or not negotiate upon new SL DRX. This can prevent the terminal from frequently triggering renegotiation.

It should be noted that this embodiment is an embodiment of a network side device corresponding to the method embodiment of FIG. 3. Therefore, reference may be made to related descriptions in the method embodiment of FIG. 3, and the same beneficial effects can be achieved. To avoid repetition, details are not described herein again.

It should be noted that various optional implementations described in the embodiments of this embodiment may be implemented in combination, or may be implemented independently. This is not limited in the embodiments of this application.

For ease of understanding, example descriptions are provided below:

In this embodiment of this application, (1) UE 1 (TX UE) transmits an SL DRX configuration (SL DRX pattern) suggestion; UE 2 (RX UE) determines whether to accept the SL DRX configuration suggestion, and if not, may further give an SL DRX configuration suggestion; and the UE 1 finally determines whether to accept the suggestion.

The foregoing information may be carried in an enhancement of an existing signaling process, or a new signaling process may be introduced.

The UE 1 may suggest one or more sets of SL DRX configuration, and the UE 2 may determine one set therefrom. Further, the UE 2 can modify some parameters.

SL DRX configuration priorities are defined. An SL DRX pattern with a lower priority may be modified.
(2) In a case that DRX configuration negotiation fails, processing manners are provided, for example, (a) rejecting, (b) link release, (c) renegotiation, or (d) DRX off. For details, refer to the following descriptions. Details are not described herein.
(3) UE configures an upper threshold of SL DRX active time duration for determining whether corresponding enabled or activated SL DRX active time duration is greater than or equal to the threshold.
(4) UE configures a lower threshold of SL DRX active time duration for determining whether corresponding enabled or activated SL DRX active time duration is greater than or equal to the threshold.

Embodiment 1: SL DRX negotiation occurs in a PCS unicast link establishment process.

Step 1: UE 1 transmits at least one set of SL DRX pattern information to UE 2, where the information is carried in a direct link establishment request message.

Specifically, each set of SL DRX pattern information may include the following parameters: a cycle, an offset, an on duration, an inactivity timer duration, a duration of an RTT timer related to a HARQ process, a retransmission timer duration, and the like.

In addition, each set of SL DRX configuration (e.g. SL DRX pattern) information may be further associated with an index value, and both are carried in the direct link establishment request message.

In addition, each set of SL DRX pattern information may be further associated with a set of SL DRX pattern attribute. This set of SL DRX pattern attribute includes at least one of a priority, a QoS (a delay, reliability, and the like), a logical channel identifier (LCID), a bearer identifier (bearer ID), a QoS flow identifier (QoS flow index), an application identifier (application ID), a service identifier (service identifier), a source address layer 2 identifier (source L2 ID), and a destination address layer 2 identifier (destination L2) ID). The SL DRX pattern attribute may be configured by a V2X layer, configured by a base station, preconfigured, or defined in a protocol.

Step 2: The UE 2 feeds back acceptable SL DRX pattern information to the UE 1, where the information is carried in a direct link establishment accept message.

Expressions of the acceptable SL DRX pattern information of the UE 2 may be any one of the following:
at least one index value in step 1;
at least one index value in step 1 and some parameters of a set of SL DRX pattern information associated with the corresponding index value, that is, parameters that the UE 2 is allowed to modify during negotiation; or
at least one set of SL DRX pattern information. Whether the at least one set of SL DRX pattern information is a copy (copy) of the at least one set of SL DRX pattern information in step 1 is not limited herein. That is, the UE 2 is allowed to modify some parameters based on step 1 during negotiation. Further, it may be further specified that only an SL DRX pattern whose priority is less than a specific threshold in step 1 can be modified.

Step 3: According to step 2, in a case that the UE 2 is allowed to modify some parameters during negotiation, after step 2, the UE 1 further determines whether to accept the SL DRX pattern information fed back by the UE 2. In a case that the SL DRX pattern information is not accepted, any one of the following is performed:
the UE 1 transmits a direct link release request message (the direct link release request message may further include a cause value indicating that SL DRX negotiation fails) to the UE 2; or
the UE 1 sets a corresponding direct link to a DRX off state (DRX inactive state).

Step 4: The UE 2 determines that there is no acceptable SL DRX pattern information, and therefore feeds back a direct link establishment reject message.

The direct link establishment reject message may further include a cause value indicating that SL DRX negotiation fails.

Then any one of the following may be performed:
the UE 1 triggers SL DRX renegotiation, that is, performs step 1 to re-initiate a direct link establishment request message; or
the UE 1 sets a corresponding direct link to a DRX off state.

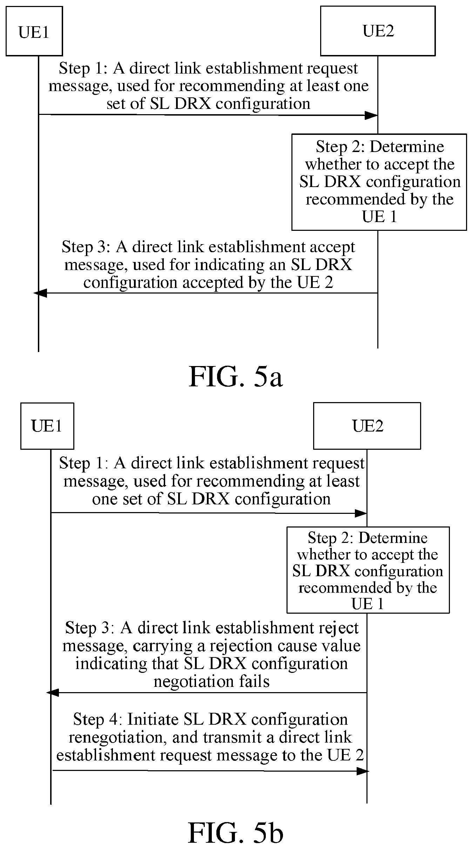

For ease of understanding, refer to FIG. 5a to 5c.

FIG. 5a shows a case in which an SL DRX configuration negotiation succeeds. As shown in FIG. 5a, the following steps may be included:
Step 1: UE 1 transmits a direct link establishment request message to UE 2 for recommending at least one set of SL DRX configuration.
Step 2: The UE 2 determines whether to accept the SL DRX configuration recommended by the UE 1.

In a case that the SL DRX configuration recommended by the UE 1 is accepted, step 3 is performed.

Step 3: The UE 2 transmits a direct link establishment accept message to the UE 1 for indicating SL DRX configuration accepted by the UE 2.

FIG. 5b shows a case in which an SL DRX configuration negotiation fails. As shown in FIG. 5b, the following steps may be included:
Step 1: UE 1 transmits a direct link establishment request message to UE 2, where the direct link establishment request message is used for recommending at least one set of SL DRX configuration.
Step 2: The UE 2 determines whether to accept the SL DRX configuration recommended by the UE 1.

In a case that the SL DRX configuration recommended by the UE 1 is rejected, step 3 is performed.

Step 3: The UE 2 transmits a direct link establishment reject message to the UE 1, where the direct link establishment reject message may carry a rejection cause value indicating that SL DRX configuration negotiation fails.

Step 4: The UE 1 initiates SL DRX configuration renegotiation, and transmits a direct link establishment request message to the UE 2.

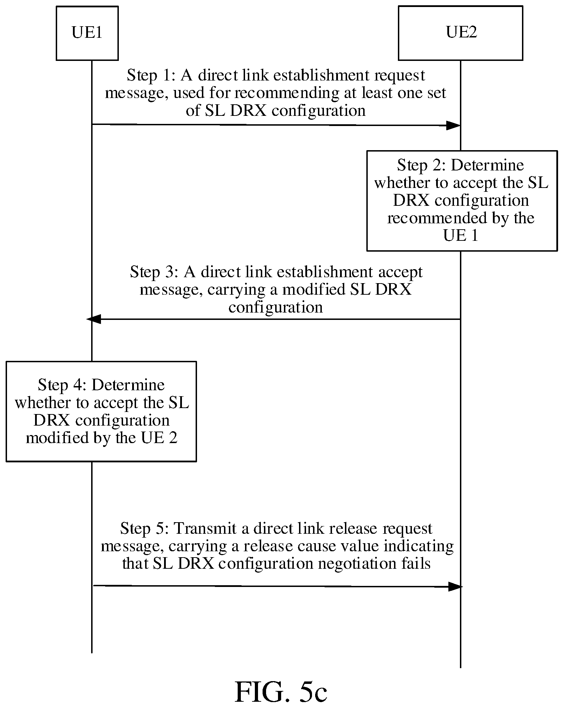

FIG. 5c shows a case in which an SL DRX configuration negotiation fails. As shown in FIG. 5c, the following steps may be included:
Step 1: UE 1 transmits a direct link establishment request message to UE 2, where the direct link establishment request message is used for recommending at least one set of SL DRX configuration.
Step 2: The UE 2 determines whether to accept the SL DRX configuration recommended by the UE 1.

In a case that the SL DRX configuration recommended by the UE 1 is modified, step 3 is performed.

Step 3: The UE 2 transmits a direct link establishment accept message to the UE 1, where the direct link establishment accept message may carry a modified SL DRX configuration.

Step 4: The UE 1 determines whether to accept the SL DRX configuration modified by the UE 2.

In a case that the SL DRX configuration modified by the UE 2 is rejected, step 5 may be performed.

Step 5: The UE 1 transmits a direct link release request message to the UE 2, where the direct link release request message may carry a release cause value indicating that SL DRX configuration negotiation fails.

Embodiment 2: SL DRX negotiation occurs in a PCS unicast link modification process.

Step 1: UE 1 transmits at least one set of SL DRX pattern information to UE 2, where the information is carried in a direct link modification request message.

Specifically, each set of SL DRX pattern information may include the following parameters: a cycle, an offset, an on duration, an inactivity timer duration, a duration of an RTT timer related to a HARQ process, a retransmission timer duration, and the like.

In addition, each set of SL DRX pattern information may be further associated with an index value, and both are carried in a direct link establishment request message, the direct link modification request message, or a PCS RRC reconfiguration message.

In addition, each set of SL DRX pattern information may be further associated with a set of SL DRX pattern attribute. This set of SL DRX pattern attribute includes at least one of a priority, a QoS (a delay, reliability, and the like), a logical channel identifier (LCID), a bearer identifier (bearer ID), a QoS flow identifier (QoS flow index), an application identifier (application ID), a service identifier (service identifier), a source address layer 2 identifier (source L2 ID), and a destination address layer 2 identifier (destination L2) ID). The SL DRX pattern attribute may be configured by a V2X layer, configured by a base station, preconfigured, defined in a protocol, or the like.

Step 2: The UE 2 feeds back acceptable SL DRX pattern information to the UE 1, where the information is carried in a direct link modification accept message.

Expressions of the acceptable SL DRX pattern information of the UE 2 may be any one of the following:
at least one index value in step 1;
at least one index value in step 1 and some parameters of a set of SL DRX pattern information associated with the corresponding index value, that is, parameters that the UE 2 is allowed to modify during negotiation; or
at least one set of SL DRX pattern information. Whether the at least one set of SL DRX pattern information is the at least one set of SL DRX pattern information in step 1 is not limited herein. That is, the UE 2 is allowed to modify some parameters during negotiation. Further, it may be further specified that only an SL DRX pattern whose priority is less than a specific threshold in step 1 can be modified.

According to step 2, in a case that the UE 2 is allowed to modify some parameters during negotiation, after step 2, the UE 1 further determines whether to accept the SL DRX pattern information fed back by the UE 2. In a case that the SL DRX pattern information is not accepted, any one of the following may be then performed:
the UE 1 transmits a direct link release request message (the direct link release request message may further include a cause value indicating that SL DRX negotiation fails) to the UE 2;
the UE 1 triggers SL DRX renegotiation without releasing a direct link, that is, performs step 1 to re-initiate a direct link modification request message; or
the UE 1 sets a corresponding direct link to a DRX off state.

Step 4: The UE 2 determines that there is no acceptable SL DRX pattern information, and therefore feeds back a direct link modification reject message.

The direct link modification reject message may further include a cause value indicating that SL DRX negotiation fails.

Then any one of the following may be performed:
the UE 1 transmits a direct link release request message (the direct link release request message may further include a cause value indicating that SL DRX negotiation fails) to the UE 2;
the UE 1 triggers SL DRX renegotiation, that is, performs step 1 to re-initiate a direct link modification request message; or
the UE 1 sets a corresponding direct link to a DRX inactive state.

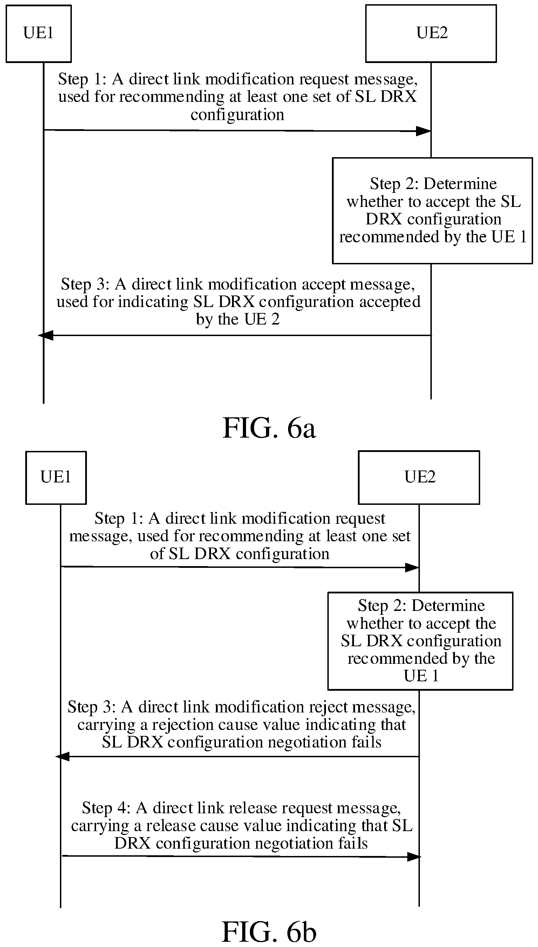

For ease of understanding, refer to FIG. 6a to 6c.

FIG. 6a shows a case in which an SL DRX configuration negotiation succeeds. As shown in FIG. 6a, the following steps may be included:
Step 1: UE 1 transmits a direct link modification request message to UE 2 for recommending at least one set of SL DRX configuration.
Step 2: The UE 2 determines whether to accept the SL DRX configuration recommended by the UE 1.

In a case that the SL DRX configuration recommended by the UE 1 is accepted, step 3 is performed.

Step 3: The UE 2 transmits a direct link modification accept message to the UE 1 for indicating SL DRX configuration accepted by the UE 2.

FIG. 6b shows a case in which an SL DRX configuration negotiation fails. As shown in FIG. 6b, the following steps may be included:
Step 1: UE 1 transmits a direct link modification request message to UE 2, where the direct link modification request message is used for recommending at least one set of SL DRX configuration.
Step 2: The UE 2 determines whether to accept the SL DRX configuration recommended by the UE 1.

In a case that the SL DRX configuration recommended by the UE 1 is rejected, step 3 is performed.

Step 3: The UE 2 transmits a direct link modification reject message to the UE 1, where the direct link modification reject message may carry a rejection cause value indicating that SL DRX configuration negotiation fails.

Step 4: The UE 1 transmits a direct link release request message to the UE 2, where the direct link release request message may carry a release cause value indicating that an SL DRX configuration negotiation fails.

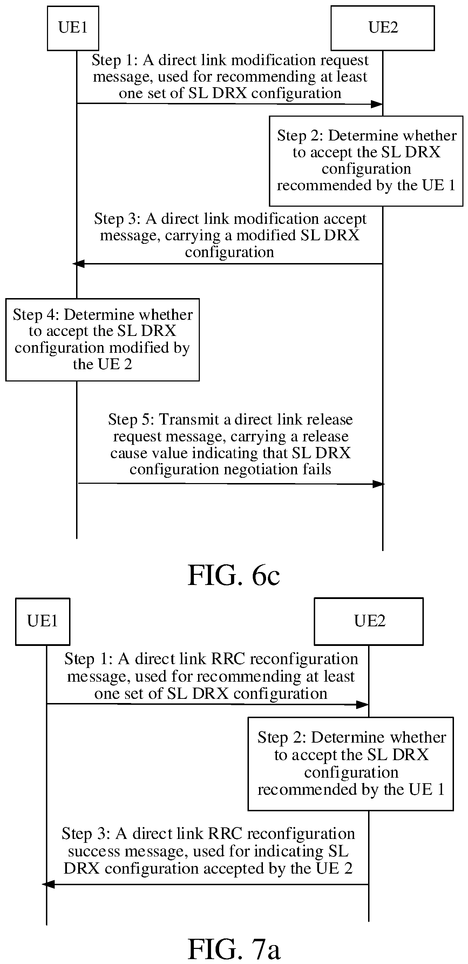

FIG. 6c shows a case in which an SL DRX configuration negotiation fails. As shown in FIG. 6c, the following steps may be included:
Step 1: UE 1 transmits a direct link modification request message to UE 2, where the direct link modification request message is used for recommending at least one set of SL DRX configuration.
Step 2: The UE 2 determines whether to accept the SL DRX configuration recommended by the UE 1.

In a case that the SL DRX configuration recommended by the UE 1 is modified, step 3 is performed.

Step 3: The UE 2 transmits a direct link modification accept message to the UE 1, where the direct link modification accept message may carry a modified SL DRX configuration.

Step 4: The UE 1 determines whether to accept the SL DRX configuration modified by the UE 2.

In a case that the SL DRX configuration modified by the UE 2 is rejected, step 5 may be performed.

Step 5: The UE 1 transmits a direct link release request message to the UE 2, where the direct link release request message may carry a release cause value indicating that SL DRX configuration negotiation fails.

Embodiment 3: SL DRX negotiation occurs in a PCS RRC reconfiguration process.

Step 1: UE 1 transmits at least one set of SL DRX pattern information to UE 2, where the information is carried in a PCS RRC reconfiguration message.

Specifically, each set of SL DRX pattern information may include the following parameters: a cycle, an offset, an on duration, an inactivity timer duration, a duration of an RTT timer related to a HARQ process, a retransmission timer duration, and the like.

In addition, each set of SL DRX pattern information may be further associated with an index value, and both are carried in a direct link establishment request message, a direct link modification request message, or the PCS RRC reconfiguration message.

In addition, each set of SL DRX pattern information may be further associated with a set of SL DRX pattern attribute. This set of SL DRX pattern attribute includes at least one of a priority, a QoS (a delay, reliability, and the like), a logical channel identifier (LCID), a bearer identifier (bearer ID), a QoS flow identifier (QoS flow index), an application identifier (application ID), a service identifier (service identifier), a source address layer 2 identifier (source L2 ID), and a destination address layer 2 identifier (destination L2) ID). The SL DRX pattern attribute may be configured by a V2X layer, configured by a base station, preconfigured, or defined in a protocol.

Step 2: The UE 2 feeds back acceptable SL DRX pattern information to the UE 1, where the information is carried in a PCS RRC reconfiguration complete message.

Expressions of the acceptable SL DRX pattern information of the UE 2 may be any one of the following:
at least one index value in step 1;
at least one index value in step 1 and some parameters of a set of SL DRX pattern information associated with the corresponding index value, that is, parameters that the UE 2 is allowed to modify during negotiation; or
at least one set of SL DRX pattern information. Whether the at least one set of SL DRX pattern information is the at least one set of SL DRX pattern information in step 1 is not limited herein. That is, the UE 2 is allowed to modify some parameters during negotiation. Further, it may be further specified that only an SL DRX pattern whose priority is less than a specific threshold in step 1 can be modified.

According to step 2, in a case that the UE 2 is allowed to modify some parameters during negotiation, after step 2, the UE 1 further determines whether to accept the SL DRX pattern information fed back by the UE 2. In a case that the SL DRX pattern information is not accepted, any one of the following may be then performed:
the UE 1 transmits a direct link release request message (the direct link release request message may further include a cause value indicating that SL DRX negotiation fails) to the UE 2;
the UE 1 triggers SL DRX renegotiation without releasing a direct link, that is, performs step 1 to re-initiate a PCS RRC reconfiguration message; or
the UE 1 sets a corresponding direct link to a DRX off state.

Step 4: The UE 2 determines that there is no acceptable SL DRX pattern information, and therefore feeds back a PCS RRC reconfiguration failure message.

The PCS RRC reconfiguration failure message may further include a cause value indicating that SL DRX negotiation fails.

Then any one of the following may be performed:
the UE 1 transmits a direct link release request message (the direct link release request message may further include a cause value indicating that SL DRX negotiation fails) to the UE 2;
the UE 1 triggers SL DRX renegotiation, that is, performs step 1 to re-initiate a PCS RRC reconfiguration message; or
the UE 1 sets a corresponding direct link to a DRX inactive state.

For ease of understanding, refer to FIG. 7a to 7c.

FIG. 7a shows a case in which an SL DRX configuration negotiation succeeds. As shown in FIG. 7a, the following steps may be included:
Step 1: UE 1 transmits a direct link RRC reconfiguration message to UE 2 for recommending at least one set of SL DRX configuration.
Step 2: The UE 2 determines whether to accept the SL DRX configuration recommended by the UE 1.

In a case that the SL DRX configuration recommended by the UE 1 is accepted, step 3 is performed.

Step 3: The UE 2 transmits a direct link RRC reconfiguration success message to the UE 1 for indicating SL DRX configuration accepted by the UE 2.

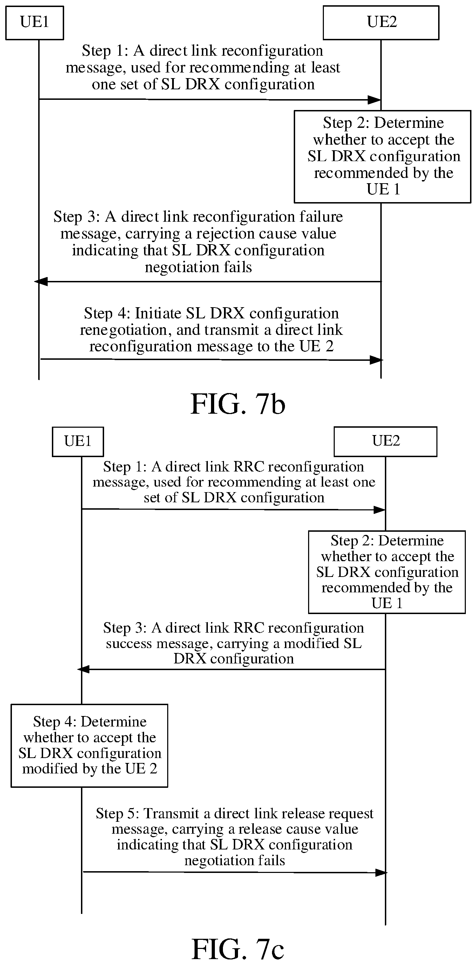

FIG. 7b shows a case in which an SL DRX configuration negotiation fails. As shown in FIG. 7b, the following steps may be included:
Step 1: UE 1 transmits a direct link RRC reconfiguration message to UE 2, where the direct link RRC reconfiguration message is used for recommending at least one set of SL DRX configuration.
Step 2: The UE 2 determines whether to accept the SL DRX configuration recommended by the UE 1.

In a case that the SL DRX configuration recommended by the UE 1 is rejected, step 3 is performed.

Step 3: The UE 2 transmits a direct link RRC reconfiguration failure message to the UE 1, where the direct link RRC reconfiguration failure message may carry a rejection cause value indicating that SL DRX configuration negotiation fails.

Step 4: The UE 1 initiates SL DRX configuration renegotiation, and transmits a direct link RRC reconfiguration message to the UE 2.

FIG. 7c shows a case in which an SL DRX configuration negotiation fails. As shown in FIG. 7c, the following steps may be included:
Step 1: UE 1 transmits a direct link RRC reconfiguration message to UE 2, where the direct link RRC reconfiguration message is used for recommending at least one set of SL DRX configuration.
Step 2: The UE 2 determines whether to accept the SL DRX configuration recommended by the UE 1.

In a case that the SL DRX configuration recommended by the UE 1 is modified, step 3 is performed.

Step 3: The UE 2 transmits a direct link RRC reconfiguration success message to the UE 1, where the direct link RRC reconfiguration success message may carry a modified SL DRX configuration.

Step 4: The UE 1 determines whether to accept the SL DRX configuration modified by the UE 2.

In a case that the SL DRX configuration modified by the UE 2 is rejected, step 5 may be performed.

Step 5: The UE 1 transmits a direct link release request message to the UE 2, where the direct link release request message may carry a release cause value indicating that SL DRX configuration negotiation fails.

Embodiment 4: SL DRX negotiation occurs in a newly introduced PCS-S or PCS RRC process.

An idea of Embodiments 1, 2, and 3 is to modify an existing signaling process. However, an idea of Embodiment 4 is to introduce a new signaling process. A benefit lies in that the process can be decoupled from the existing signaling process and occur independently.

Step 1: UE 1 transmits at least one set of SL DRX pattern information to UE 2, where the information is carried in a newly introduced PCS-S or PCS RRC message (which may be named as an SL DRX configuration request message).

Specifically, each set of SL DRX pattern information may include the following parameters: a cycle, an offset, an on duration, an inactivity timer duration, a duration of an RTT timer related to a HARQ process, a retransmission timer duration, and the like.

In addition, each set of SL DRX pattern information may be further associated with an index value, and both are carried in a direct link establishment request message, the direct link modification request message, or a PCS RRC reconfiguration message.

In addition, each set of SL DRX pattern information may be further associated with a set of SL DRX pattern attribute. This set of SL DRX pattern attribute includes at least one of a priority, a QoS (a delay, reliability, and the like), a logical channel identifier (LCID), a bearer identifier (bearer ID), a QoS flow identifier (QoS flow index), an application identifier (application ID), a service identifier (service identifier), a source address layer 2 identifier (source L2 ID), and a destination address layer 2 identifier (destination L2) ID). The SL DRX pattern attribute may be configured by a V2X layer, configured by a base station, preconfigured, or defined in a protocol.

Step 2: The UE 2 feeds back acceptable SL DRX pattern information to the UE 1, where the information is carried in a newly introduced PCS-S or PCS RRC message (which may be named as an SL DRX configuration response message).

Expressions of the acceptable SL DRX pattern information of the UE 2 may be any one of the following:
at least one index value in step 1;
at least one index value in step 1 and some parameters of a set of SL DRX pattern information associated with the corresponding index value, that is, parameters that the UE 2 is allowed to modify during negotiation; or
at least one set of SL DRX pattern information. Whether the at least one set of SL DRX pattern information is the at least one set of SL DRX pattern information in step 1 is not limited herein. That is, the UE 2 is allowed to modify some parameters during negotiation. Further, it may be further specified that only an SL DRX pattern whose priority is less than a specific threshold in step 1 can be modified.

According to step 2, in a case that the UE 2 is allowed to modify some parameters during negotiation, after step 2, the UE 1 further determines whether to accept the SL DRX pattern information fed back by the UE 2. In a case that the SL DRX pattern information is not accepted, any one of the following is performed:
the UE 1 transmits a direct link release request message (the direct link release request message may further include a cause value indicating that SL DRX negotiation fails) to the UE 2;
the UE 1 triggers SL DRX renegotiation without releasing a direct link, that is, performs step 1 to re-initiate an SL DRX configuration request message; or
the UE 1 sets a corresponding direct link to a DRX off state.

Step 4: The UE 2 determines that there is no acceptable SL DRX pattern information, and therefore feeds back a newly introduced PCS-S or PCS RRC message (which may be named as an SL DRX configuration reject message).

The SL DRX configuration reject message may further include a cause value indicating that SL DRX negotiation fails.

Then any one of the following may be performed:
the UE 1 transmits a direct link release request message (the direct link release request message may further include a cause value indicating that SL DRX negotiation fails) to the UE 2;
the UE 1 triggers SL DRX renegotiation, that is, performs step 1 to re-initiate an SL DRX configuration request message; or
the UE 1 sets a corresponding direct link to a DRX off state.

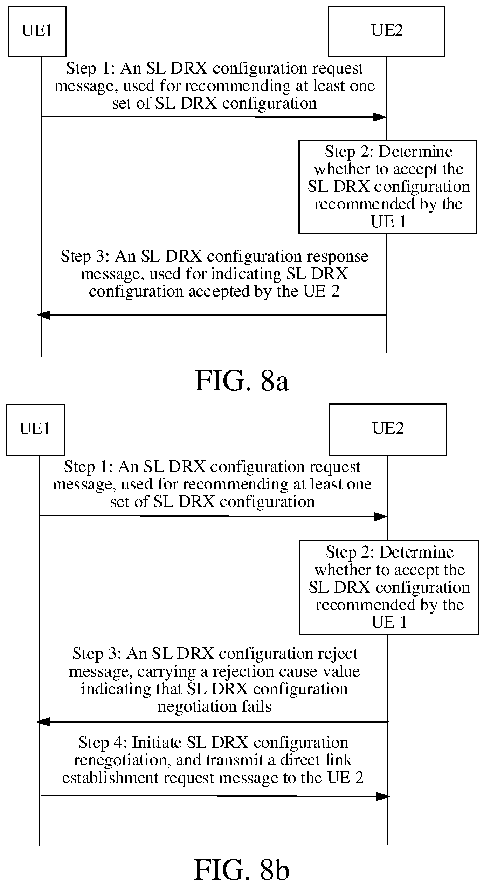

For ease of understanding, refer to FIG. 8a to 8c.

FIG. 8a shows a case in which an SL DRX configuration negotiation succeeds. As shown in FIG. 8a, the following steps may be included:
Step 1: UE 1 transmits an SL DRX configuration request message to UE 2 for recommending at least one set of SL DRX configuration.
Step 2: The UE 2 determines whether to accept the SL DRX configuration recommended by the UE 1.

In a case that the SL DRX configuration recommended by the UE 1 is accepted, step 3 is performed.

Step 3: The UE 2 transmits an SL DRX configuration response message to the UE 1 for indicating SL DRX configuration accepted by the UE 2.

FIG. 8b shows a case in which an SL DRX configuration negotiation fails. As shown in FIG. 8b, the following steps may be included:
Step 1: UE 1 transmits an SL DRX configuration request message to UE 2, where the SL DRX configuration request message is used for recommending at least one set of SL DRX configuration.
Step 2: The UE 2 determines whether to accept the SL DRX configuration recommended by the UE 1.

In a case that the SL DRX configuration recommended by the UE 1 is rejected, step 3 is performed.

Step 3: The UE 2 transmits an SL DRX configuration reject message to the UE 1, where the SL DRX configuration reject message may carry a rejection cause value indicating that SL DRX configuration negotiation fails.

Step 4: The UE 1 initiates SL DRX configuration renegotiation, and transmits an SL DRX configuration request message to the UE 2.

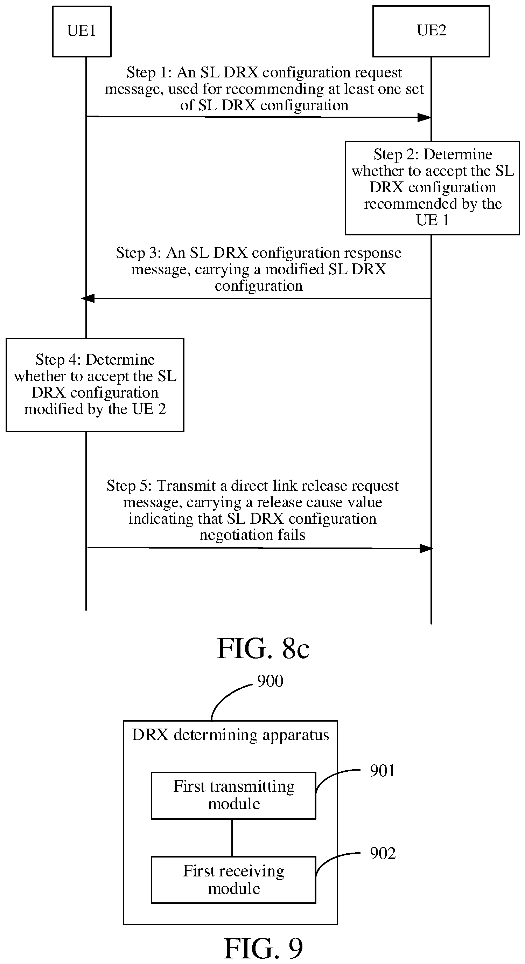

FIG. 8c shows a case in which an SL DRX configuration negotiation fails. As shown in FIG. 8c, the following steps may be included:
Step 1: UE 1 transmits an SL DRX configuration request message to UE 2, where the SL DRX configuration request message is used for recommending at least one set of SL DRX configuration.
Step 2: The UE 2 determines whether to accept the SL DRX configuration recommended by the UE 1.

In a case that the SL DRX configuration recommended by the UE 1 is modified, step 3 is performed.

Step 3: The UE 2 transmits an SL DRX configuration response message to the UE 1, where the SL DRX configuration response message may carry a modified SL DRX configuration.

Step 4: The UE 1 determines whether to accept the SL DRX configuration modified by the UE 2.

In a case that the SL DRX configuration modified by the UE 2 is rejected, step 5 may be performed.

Step 5: The UE 1 transmits a direct link release request message to the UE 2, where the direct link release request message may carry a release cause value indicating that SL DRX configuration negotiation fails.

Embodiment 5: SL UE has an upper limit of SL DRX active time duration, where the upper limit is configured by a V2X layer, configured by a base station, or preconfigured.

Before Embodiments 1 to 4, the SL UE may further receive an upper limit of SL DRX active time duration, where the upper limit is configured by a V2X layer, configured by a base station, or preconfigured. In a case that enabled or activated SL DRX active time duration exceeds the upper limit, the UE may reject link establishment; otherwise, a connection may be established, or an available DRX configuration may be recommended. This value is intended for providing a reference in a case that the UE determines whether an SL DRX pattern can be accepted in terms of power saving and service QoS.

Embodiment 6: SL UE has a lower limit of SL DRX active time duration, where the lower limit is configured by a V2X layer, configured by a base station, or preconfigured.

Before Embodiments 1 to 4, the SL UE may further receive a lower limit of SL DRX active time duration, where the upper limit is configured by a V2X layer, configured by a base station, or preconfigured. In a case that enabled or activated SL DRX active time duration is less than the lower limit, the UE cannot reject a configuration, enable or activate new SL DRX, or negotiate upon new SL DRX. This value is intended for preventing the UE from frequently triggering renegotiation, which is beneficial to system performance.

In the embodiments of the present invention, details of SL DRX configuration negotiation signaling and processing for negotiation failures are designed, to ensure normal operation of sidelink DRX and save power for sidelink UE.

It should be noted that the DRX determining method provided in the embodiments of this application may be performed by a DRX determining apparatus, or by a control module that is in the DRX determining apparatus and that is configured to perform the DRX determining method. In the embodiments of this application, a DRX determining apparatus provided in the embodiments of this application is described by using an example in which the DRX determining apparatus performs the DRX determining method.

FIG. 9 is a first structural diagram of a DRX determining apparatus according to an embodiment of this application.

As shown in FIG. 9, the DRX determining apparatus 900 includes:
a first transmitting module 901, configured to transmit first information to a second terminal, where the first information is used for indicating N sets of sidelink SL DRX configuration, and N is a positive integer; and
a first receiving module 902, configured to receive feedback information transmitted by the second terminal for the first information.

Optionally, the first information includes at least one of the following: the N sets of SL DRX configuration, and N index values, where the N index values and the N sets of SL DRX configuration are in a one-to-one correspondence.

Optionally, the first information further includes N feature information groups, and the N feature information groups and the N sets of SL DRX configuration are in a one-to-one correspondence.

Optionally, the feature information group includes at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

Optionally, the SL DRX configuration includes at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, where
the target reference time point is a reference time point at which the SL DRX configuration takes effect.

Optionally, the first information is carried in any one of the following: a direct link establishment request message, a direct link modification request message, a direct link radio resource control RRC reconfiguration message, and an SL DRX configuration request message.

Optionally, the feedback information includes any one of the following:
M index values;
M index values, and a first parameter in first SL DRX configuration; or
K sets of SL DRX configuration, where
the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

Optionally, the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

Optionally, the first parameter is any one of the following: a parameter that is in the first SL DRX configuration and that is accepted by the second terminal, or a parameter that is in the first SL DRX configuration and that is modified by the second terminal.

Optionally, the feedback information is carried in any one of the following: a direct link establishment accept message, a direct link modification accept message, a direct link RRC reconfiguration complete message, or an SL DRX configuration response message.

Optionally, in a case that the feedback information meets a first condition, the DRX determining apparatus 900 further includes:
a first execution module, configured to perform a first operation in a case that a first terminal rejects the feedback information, where
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration; and
   the first operation includes any one of the following:
      transmitting second information to the second terminal, where the second information is used for indicating that SL DRX configuration negotiation between the first terminal and the second terminal fails;
      setting a direct link to a DRX inactive state; or
      triggering SL DRX configuration renegotiation between the first terminal and the second terminal.

Optionally, the feedback information indicates rejection of the N sets of SL DRX configuration.

Optionally, the feedback information is carried in any one of the following: a direct link establishment reject message, a direct link modification reject message, a direct link RRC reconfiguration failure message, or an SL DRX configuration reject message.

Optionally, the DRX determining apparatus 900 further includes:
a second execution module, configured to perform a second operation, where
the second operation includes any one of the following:
   transmitting second information to the second terminal, where the second information is used for indicating that SL DRX configuration negotiation between the first terminal and the second terminal fails;
   setting a direct link to a DRX inactive state; or
   triggering SL DRX configuration renegotiation between the first terminal and the second terminal.

Optionally, the second information is carried in a direct link release request message.

Optionally, the DRX determining apparatus further includes:
a first determining module, configured to determine the N sets of SL DRX configuration based on third information, where the third information is used for indicating at least one of the following: an upper threshold of SL DRX active time duration, and a lower threshold of SL DRX active time duration.

Optionally, in a case that the feedback information meets a first condition, the DRX determining apparatus further includes:
a second determining module, configured to determine, based on third information, whether the feedback information is to be accepted, where the third information is used for indicating at least one of the following: an upper threshold of SL DRX active time duration, and a lower threshold of SL DRX active time duration, where
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration.

The DRX determining apparatus in this embodiment of this application may be an apparatus, or may be a component, an integrated circuit, or a chip in a terminal. The apparatus may be a mobile terminal or a non-mobile terminal. For example, the mobile terminal may include but is not limited to the aforementioned types of the terminal 11, and the non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The DRX determining apparatus in this embodiment of this application may be an apparatus with an operating system. The operating system may be an Android (Android) operating system, may be an iOS operating system, or may be another possible operating system. This is not specifically limited in this embodiment of this application.

The DRX determining apparatus 900 provided in this embodiment of this application is capable of implementing the processes implemented in the method embodiment of FIG. 3, with the same technical effects achieved. To avoid repetition, details are not described herein again.

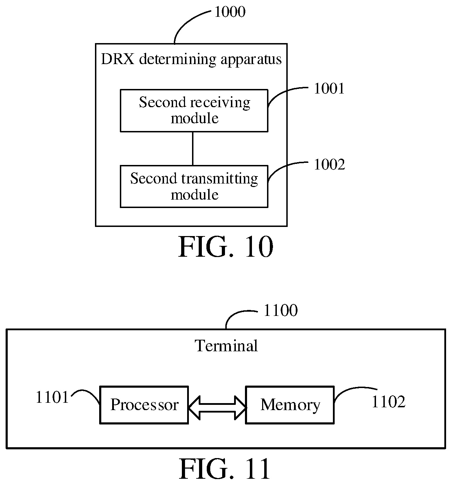

FIG. 10 is a second structural diagram of a DRX determining apparatus according this application embodiment of this application.

As shown in FIG. 10, the DRX determining apparatus 1000 includes:
a second receiving module 1001, configured to receive first information transmitted by a first terminal, where the first information is used for indicating N sets of sidelink SL DRX configuration, and N is a positive integer; and
a second transmitting module 1002, configured to transmit, to the first terminal, feedback information for the first information.

Optionally, the first information includes at least one of the following: the N sets of SL DRX configuration, and N index values, where the N index values and the N sets of SL DRX configuration are in a one-to-one correspondence.

Optionally, the first information further includes N feature information groups, and the N feature information groups and the N sets of SL DRX configuration are in a one-to-one correspondence.

Optionally, the feature information group includes at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

Optionally, the SL DRX configuration includes at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, where the target reference time point is a reference time point at which the SL DRX configuration takes effect.

Optionally, the first information is carried in any one of the following: a direct link establishment request message, a direct link modification request message, a direct link radio resource control RRC reconfiguration message, and an SL DRX configuration request message.

Optionally, the feedback information includes any one of the following:
M index values;
M index values, and a first parameter in first SL DRX configuration; or
K sets of SL DRX configuration, where
the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

Optionally, the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

Optionally, the first parameter is any one of the following: a parameter that is in the first SL DRX configuration and that is accepted by the second terminal, or a parameter that is in the first SL DRX configuration and that is modified by the second terminal.

Optionally, the feedback information is carried in any one of the following: a direct link establishment accept message, a direct link modification accept message, a direct link RRC reconfiguration complete message, or an SL DRX configuration response message.

Optionally, in a case that the feedback information meets a first condition, after the feedback information for the first information is transmitted to the first terminal, the DRX determining apparatus 1000 further includes:
a third receiving module, configured to receive second information transmitted by the first terminal, where second information is used for indicating that SL DRX configuration negotiation between the first terminal and the second terminal fails;
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration.

Optionally, the feedback information indicates rejection of the N sets of SL DRX configuration.

Optionally, the feedback information is carried in any one of the following: a direct link establishment reject message, a direct link modification reject message, a direct link RRC reconfiguration failure message, or an SL DRX configuration reject message.

Optionally, the DRX determining apparatus 1000 further includes:
a fourth receiving module, configured to receive second information transmitted by the first terminal, where second information is used for indicating that SL DRX configuration negotiation between the first terminal and the second terminal fails.

Optionally, the second information is carried in a direct link release request message.

Optionally, the DRX determining apparatus further includes:
a third determining module, configured to generate the feedback information based on third information, where the third information is used for indicating at least one of the following: an upper threshold of SL DRX active time duration, and a lower threshold of SL DRX active time duration.

The DRX determining apparatus in this embodiment of this application may be an apparatus, or may be a component, an integrated circuit, or a chip in a network side device. The network side device may include but is not limited to the aforementioned types of the network side device 12. This is not specifically limited in this embodiment of this application.

The DRX determining apparatus 1000 provided in this embodiment of this application is capable of implementing the processes implemented in the method embodiment of FIG. 4, with the same technical effects achieved. To avoid repetition, details are not described herein again.

Optionally, as shown in FIG. 11, an embodiment of this application further provides a terminal 1100, including a processor 1101, a memory 1102, and a program or instructions stored in the memory 1102 and executable on the processor 1101. When the program or the instructions are executed by the processor 1101, the processes of the method embodiment of FIG. 3 or FIG. 4 are implemented, with the same technical effects achieved. To avoid repetition, details are not described herein again.

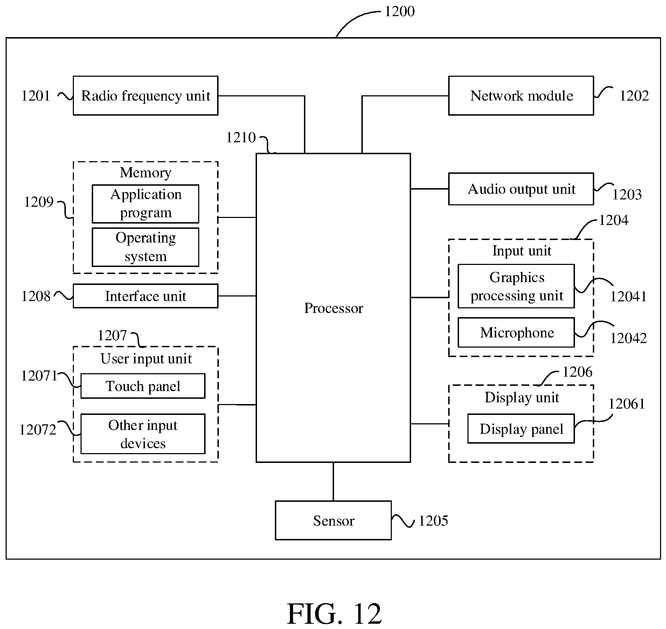

FIG. 12 is a schematic diagram of a hardware structure of a terminal for implementing an embodiment of this application.

The terminal 1200 includes but is not limited to components such as a radio frequency unit 1201, a network module 1202, an audio output unit 1203, an input unit 1204, a sensor 1205, a display unit 1206, a user input unit 12012, an interface unit 1208, a memory 1209, and a processor 1210.

Persons skilled in the art can understand that the terminal 1200 may further include a power supply (for example, a battery) that supplies power to each component. The power supply may be logically connected to the processor 1210 by using a power management system, to implement functions such as charging management, discharging management, and power consumption management by using the power management system. The terminal structure shown in FIG. 12 does not constitute a limitation on the terminal. The terminal may include more or fewer components than those shown in the figure, or some components may be combined, or there may be a different component layout. Details are not described herein again

It should be understood that, in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include the display panel 12061. The display panel 12061 may be configured in a form of a liquid crystal display, an organic light-emitting diode, or the like. The user input unit 12012 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a function key (such as a volume control key or an on/off key), a trackball, a mouse, and a joystick. Details are not described herein.

In this embodiment of this application, the radio frequency unit 1201 receives downlink data from a network side device and then transmits the downlink data to the processor 1210 for processing; and transmits uplink data to the network side device. Usually, the radio frequency unit 1201 includes but is not limited to an antenna, at least one amplifier, a transceiver, a coupler, a low noise amplifier, a duplexer, and the like.

The memory 1209 may be configured to store software programs or instructions and various data. The memory 1209 may mainly include a program or instruction storage region and a data storage region. The program or instruction storage region may store an operating system, an application program or instructions required by at least one function (for example, an audio play function or an image play function), and the like. In addition, the memory 1209 may include a high-speed random access memory, or may include a non-volatile memory, where the non-volatile memory may be a read-only memory (Read-Only Memory, ROM), a programmable read-only memory (Programmable ROM, PROM), an erasable programmable read-only memory(Erasable PROM, EPROM), an electrically erasable programmable read-only memory (Electrically EPROM, EEPROM), or a flash memory, for example, at least one magnetic disk storage device, a flash memory, or another non-volatile solid-state storage device.

The processor 1210 may include one or more processing units. Optionally, the processor 1210 may integrate an application processor and a modem processor. The application processor mainly processes an operating system, a user interface, an application program or instructions, and the like. The modem processor mainly processes wireless communication, for example, a baseband processor. It may be understood that the modem processor may alternatively not be integrated in the processor 1210.

Case 1: The terminal 1200 is the first terminal.

In this case, the radio frequency unit 1201 is configured to:
transmit first information to a second terminal, where the first information is used for indicating N sets of sidelink SL DRX configuration, and N is a positive integer; and
receive feedback information transmitted by the second terminal for the first information.

Optionally, the first information includes at least one of the following: the N sets of SL DRX configuration, and N index values, where the N index values and the N sets of SL DRX configuration are in a one-to-one correspondence.

Optionally, the first information further includes N feature information groups, and the N feature information groups and the N sets of SL DRX configuration are in a one-to-one correspondence.

Optionally, the feature information group includes at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

Optionally, the SL DRX configuration includes at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, where
the target reference time point is a reference time point at which the SL DRX configuration takes effect.

Optionally, the first information is carried in any one of the following: a direct link establishment request message, a direct link modification request message, a direct link radio resource control RRC reconfiguration message, and an SL DRX configuration request message.

Optionally, the feedback information includes any one of the following:
M index values;
M index values, and a first parameter in first SL DRX configuration; or
K sets of SL DRX configuration, where
the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

Optionally, the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

Optionally, the first parameter is any one of the following: a parameter that is in the first SL DRX configuration and that is accepted by the second terminal, or a parameter that is in the first SL DRX configuration and that is modified by the second terminal.

Optionally, the feedback information is carried in any one of the following: a direct link establishment accept message, a direct link modification accept message, a direct link RRC reconfiguration complete message, or an SL DRX configuration response message.

Optionally, in a case that the feedback information meets a first condition, the processor 1210 is configured to:
perform a first operation in a case that the first terminal rejects the feedback information, where
the first condition includes any one of the following:
   the feedback information includes M index values, and the first parameter in the first SL DRX configuration, and the first parameter is a parameter that is in the first SL DRX configuration and that is modified by the second terminal;
   the K sets of SL DRX configuration included in the feedback information are obtained by the second terminal by modifying SL DRX configuration in the N sets; or
   the K sets of SL DRX configuration included in the feedback information are SL DRX configuration other than the N sets of SL DRX configuration; and
   the first operation includes any one of the following:
      transmitting, by the radio frequency unit 1201, second information to the second terminal, where the second information is used for indicating that SL DRX configuration negotiation between the first terminal and the second terminal fails;
      setting a direct link to a DRX inactive state; or
      triggering SL DRX configuration renegotiation between the first terminal and the second terminal.

Optionally, the feedback information indicates rejection of the N sets of SL DRX configuration.

Optionally, the feedback information is carried in any one of the following: a direct link establishment reject message, a direct link modification reject message, a direct link RRC reconfiguration failure message, or an SL DRX configuration reject message.

Optionally, the processor 1210 is further configured to:
perform a second operation, where
the second operation includes any one of the following:
   transmitting, by the radio frequency unit 1201, second information to the second terminal, where the second information is used for indicating that SL DRX configuration negotiation between the first terminal and the second terminal fails;
   setting a direct link to a DRX inactive state; or
   triggering SL DRX configuration renegotiation between the first terminal and the second terminal.

Optionally, the second information is carried in a direct link release request message.

Optionally, the processor 1210 is further configured to: determine the N sets of SL DRX configuration based on third information, where the third information is used for indicating at least one of the following: an upper threshold of SL DRX active time duration, and a lower threshold of SL DRX active time duration.

Optionally, in a case that the feedback information meets a first condition, the processor 1210 is configured to: determine, based on third information, whether the feedback information is to be accepted, where the third information is used for indicating at least one of the following: an upper threshold of SL DRX active time duration, and a lower threshold of SL DRX active time duration, where
the first condition includes any one of the following:
the feedback information includes M index values, and the first parameter in the first SL DRX configuration, and the first parameter is a parameter that is in the first SL DRX configuration and that is modified by the second terminal;
the K sets of SL DRX configuration included in the feedback information are obtained by the second terminal by modifying SL DRX configuration in the N sets; or
the K sets of SL DRX configuration included in the feedback information are SL DRX configuration other than the N sets of SL DRX configuration.

Case 2: The terminal 1200 is the second terminal.

In this case, the radio frequency unit 1201 is configured to:
receive first information transmitted by a first terminal, where the first information is used for indicating N sets of sidelink SL DRX configuration, and N is a positive integer; and
transmit, to the first terminal, feedback information for the first information.

Optionally, the first information includes at least one of the following: the N sets of SL DRX configuration, and N index values, where the N index values and the N sets of SL DRX configuration are in a one-to-one correspondence.

Optionally, the first information further includes N feature information groups, and the N feature information groups and the N sets of SL DRX configuration are in a one-to-one correspondence.

Optionally, the feature information group includes at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

Optionally, the SL DRX configuration includes at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, where the target reference time point is a reference time point at which the SL DRX configuration takes effect.

Optionally, the first information is carried in any one of the following: a direct link establishment request message, a direct link modification request message, a direct link radio resource control RRC reconfiguration message, and an SL DRX configuration request message.

Optionally, the feedback information includes any one of the following:
M index values;
M index values, and a first parameter in first SL DRX configuration; or
K sets of SL DRX configuration, where
the M index values and M sets of SL DRX configuration in the N sets of SL DRX configuration are in a one-to-one correspondence, the first SL DRX configuration includes at least one set of SL DRX configuration in the M sets of SL DRX configuration, M is a positive integer less than or equal to N, and K is a positive integer.

Optionally, the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

Optionally, the first parameter is any one of the following: a parameter that is in the first SL DRX configuration and that is accepted by the second terminal, or a parameter that is in the first SL DRX configuration and that is modified by the second terminal.

Optionally, the feedback information is carried in any one of the following: a direct link establishment accept message, a direct link modification accept message, a direct link RRC reconfiguration complete message, or an SL DRX configuration response message.

Optionally, in a case that the feedback information meets a first condition, the radio frequency unit 1201 is further configured to: receive second information transmitted by the first terminal, where second information is used for indicating that SL DRX configuration negotiation between the first terminal and the second terminal fails, where
the first condition includes any one of the following:
the feedback information includes M index values, and the first parameter in the first SL DRX configuration, and the first parameter is a parameter that is in the first SL DRX configuration and that is modified by the second terminal;
the K sets of SL DRX configuration included in the feedback information are obtained by the second terminal by modifying SL DRX configuration in the N sets; or
the K sets of SL DRX configuration included in the feedback information are SL DRX configuration other than the N sets of SL DRX configuration.

Optionally, the feedback information indicates rejection of the N sets of SL DRX configuration.

Optionally, the feedback information is carried in any one of the following: a direct link establishment reject message, a direct link modification reject message, a direct link RRC reconfiguration failure message, or an SL DRX configuration reject message.

Optionally, the radio frequency unit 1201 is further configured to:
receive second information transmitted by the first terminal, where the second information is used for indicating that SL DRX configuration negotiation between the first terminal and the second terminal fails.

Optionally, the second information is carried in a direct link release request message.

Optionally, the processor 1210 is further configured to: generate the feedback information based on third information, where the third information is used for indicating at least one of the following: an upper threshold of SL DRX active time duration, and a lower threshold of SL DRX active time duration.

It should be noted that the terminal 1200 in this embodiment can implement the processes of the method embodiment of FIG. 3 in the embodiments of this application, with the same beneficial effects achieved. To avoid repetition, details are not described herein again.

An embodiment of this application further provides a readable storage medium. The readable storage medium stores a program or instructions. When the program or the instructions are executed by a processor, the processes of the method embodiment of FIG. 3 or FIG. 4 are implemented, with the same technical effects achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc. The readable storage medium may be volatile or non-volatile. In addition, it should be noted that the readable storage medium may be non-transitory.

An embodiment of this application further provides a chip. The chip includes a processor and a communications interface. The communications interface is coupled to the processor. The processor is configured to run a program or instructions for a network side device, to implement the processes of the method embodiment of FIG. 3 or FIG. 4, with the same technical effects achieved. To avoid repetition, details are not described herein again.

It should be understood that the chip provided in this embodiment of this application may also be referred to as a system-level chip, a system on chip, a chip system, a system-on-a-chip, or the like.

It should be noted that, in this specification, the terms "include" and "comprise", or any of their variants are intended to cover a non-exclusive inclusion, such that a process, a method, an article, or an apparatus that includes a list of elements not only includes those elements but also includes other elements that are not expressly listed, or further includes elements inherent to such a process, method, article, or apparatus. In absence of more constraints, an element preceded by "includes a... " does not preclude the existence of other identical elements in the process, method, article, or apparatus that includes the element. In addition, it should be noted that the scope of the method and apparatus in the implementations of this application is not limited to performing functions in the shown or described order, but may also include performing functions in a substantially simultaneous manner or in a reverse order depending on the functions involved. For example, the described method may be performed in an order different from that described, and steps may be added, omitted, or combined. In addition, features described with reference to some examples may be combined in other examples.

According to the foregoing description of the implementations, persons skilled in the art may clearly understand that the methods in the foregoing embodiments may be implemented by using software in combination with a necessary common hardware platform, and certainly may be alternatively implemented by using hardware. However, in most cases, the former is a preferred implementation. Based on such an understanding, the technical solutions of this application essentially or the part contributing to the prior art may be implemented in a form of a software product. The computer software product may be stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

## Claims

1. A discontinuous reception DRX determining method, performed by a first terminal, wherein the method comprises:
transmitting first information to a second terminal, wherein the first information is used for indicating N sets of sidelink SL DRX configuration, and N is a positive integer; and
receiving feedback information transmitted by the second terminal for the first information.

2. The method according to claim 1, wherein the first information comprises at least one of the following: the N sets of SL DRX configuration, and N index values, wherein the N index values and the N sets of SL DRX configuration are in a one-to-one correspondence.

3. The method according to claim 1, wherein the first information further comprises N feature information groups, and the N feature information groups and the N sets of SL DRX configuration are in a one-to-one correspondence.

4. The method according to claim 3, wherein a feature information group comprises at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

5. The method according to claim 1, wherein SL DRX configuration comprises at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, wherein the target reference time point is a reference time point at which the SL DRX configuration takes effect.

6. The method according to claim 1, wherein the first information is carried in any one of the following: a direct link establishment request message, a direct link modification request message, a direct link radio resource control RRC reconfiguration message, and an SL DRX configuration request message.

7. The method according to claim 1, wherein the feedback information comprises any one of the following:
M index values;
M index values, and a first parameter in first SL DRX configuration; or
K sets of SL DRX configuration, wherein
the M index values and M sets of SL DRX configuration in the N sets of SL DRX configuration are in a one-to-one correspondence, the first SL DRX configuration comprises at least one set of SL DRX configuration in the M sets of SL DRX configuration, M is a positive integer less than or equal to N, and K is a positive integer.

8. The method according to claim 7, wherein the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

9. The method according to claim 8, wherein the first parameter is any one of the following: a parameter that is in the first SL DRX configuration and that is accepted by the second terminal, or a parameter that is in the first SL DRX configuration and that is modified by the second terminal.

10. The method according to claim 7, wherein the feedback information is carried in any one of the following: a direct link establishment accept message, a direct link modification accept message, a direct link RRC reconfiguration complete message, or an SL DRX configuration response message.

11. The method according to claim 7, wherein in a case that the feedback information meets a first condition, after receiving the feedback information transmitted by the second terminal for the first information, the method further comprises:
performing a first operation in a case that the first terminal rejects the feedback information, wherein
the first condition comprises any one of the following:
that the feedback information comprises the M index values, and the first parameter in the first SL DRX configuration, and the first parameter is a parameter that is in the first SL DRX configuration and that is modified by the second terminal;
that the K sets of SL DRX configuration comprised in the feedback information are obtained by the second terminal by modifying SL DRX configuration in the N sets; or
that the K sets of SL DRX configuration comprised in the feedback information are SL DRX configuration other than the N sets of SL DRX configuration; and
the first operation comprises any one of the following:
transmitting second information to the second terminal, wherein the second information is used for indicating that SL DRX configuration negotiation between the first terminal and the second terminal fails;
setting a direct link to a DRX inactive state; or
triggering SL DRX configuration renegotiation between the first terminal and the second terminal.

12. The method according to claim 1, wherein the feedback information indicates rejection of the N sets of SL DRX configuration.

13. The method according to claim 12, wherein the feedback information is carried in any one of the following: a direct link establishment reject message, a direct link modification reject message, a direct link RRC reconfiguration failure message, or an SL DRX configuration reject message.

14. The method according to claim 12, wherein after receiving the feedback information transmitted by the second terminal for the first information, the method further comprises:
performing a second operation, wherein
the second operation comprises any one of the following:
transmitting second information to the second terminal, wherein the second information is used for indicating that SL DRX configuration negotiation between the first terminal and the second terminal fails;
setting a direct link to a DRX inactive state; or
triggering SL DRX configuration renegotiation between the first terminal and the second terminal.

15. The method according to claim 11 or 14, wherein the second information is carried in a direct link release request message.

16. The method according to claim 1, wherein before transmitting the first information to the second terminal, the method further comprises:
determining the N sets of SL DRX configuration based on third information, wherein the third information is used for indicating at least one of the following: an upper threshold of SL DRX active time duration, and a lower threshold of SL DRX active time duration.

17. The method according to claim 1, wherein in a case that the feedback information meets a first condition, after receiving the feedback information transmitted by the second terminal for the first information, the method further comprises:
determining, based on third information, whether the feedback information is to be accepted, wherein the third information is used for indicating at least one of the following: an upper threshold of SL DRX active time duration, and a lower threshold of SL DRX active time duration, wherein
the first condition comprises any one of the following:
that the feedback information comprises M index values, and a first parameter in first SL DRX configuration, and the first parameter is a parameter that is in the first SL DRX configuration and that is modified by the second terminal;
that K sets of SL DRX configuration comprised in the feedback information are obtained by the second terminal by modifying SL DRX configuration in the N sets; or
that the K sets of SL DRX configuration comprised in the feedback information are SL DRX configuration other than the N sets of SL DRX configuration.

18. A DRX determining method, performed by a second terminal, wherein the method comprises:
receiving first information transmitted by a first terminal, wherein the first information is used for indicating N sets of sidelink SL DRX configuration, and N is a positive integer; and
transmitting, to the first terminal, feedback information for the first information.

19. The method according to claim 18, wherein the first information comprises at least one of the following: the N sets of SL DRX configuration, and N index values, wherein the N index values and the N sets of SL DRX configuration are in a one-to-one correspondence.

20. The method according to claim 18, wherein the first information further comprises N feature information groups, and the N feature information groups and the N sets of SL DRX configuration are in a one-to-one correspondence.

21. The method according to claim 18, wherein a feature information group comprises at least one of the following: an SL DRX configuration priority, quality of service QoS, a logical channel identifier, a logical channel priority, a bearer identifier, a bearer priority, a QoS flow identifier, an application identifier, a service identifier, a source address layer 2 identifier, and a destination address layer 2 identifier.

22. The method according to claim 18, wherein SL DRX configuration comprises at least one of the following items of SL DRX: a cycle, an offset relative to a target reference time point, an on duration, a running duration of an inactivity timer, a running duration of a round trip time RTT timer related to a hybrid automatic repeat request HARQ process, and a running duration of a retransmission timer, wherein the target reference time point is a reference time point at which the SL DRX configuration takes effect.

23. The method according to claim 18, wherein the first information is carried in any one of the following: a direct link establishment request message, a direct link modification request message, a direct link radio resource control RRC reconfiguration message, and an SL DRX configuration request message.

24. The method according to claim 18, wherein the feedback information comprises any one of the following:
M index values;
M index values, and a first parameter in first SL DRX configuration; or
K sets of SL DRX configuration, wherein
the M index values and M sets of SL DRX configuration in the N sets of SL DRX configuration are in a one-to-one correspondence, the first SL DRX configuration comprises at least one set of SL DRX configuration in the M sets of SL DRX configuration, M is a positive integer less than or equal to N, and K is a positive integer.

25. The method according to claim 24, wherein the K sets of SL DRX configuration meet any one of the following:
that the K sets of SL DRX configuration are SL DRX configuration in the N sets of SL DRX configuration;
that the K sets of SL DRX configuration are obtained by the second terminal by modifying SL DRX configuration in the N sets; or
that the K sets of SL DRX configuration are SL DRX configuration other than the N sets of SL DRX configuration.

26. The method according to claim 25, wherein the first parameter is any one of the following: a parameter that is in the first SL DRX configuration and that is accepted by the second terminal, or a parameter that is in the first SL DRX configuration and that is modified by the second terminal.

27. The method according to claim 24, wherein the feedback information is carried in any one of the following: a direct link establishment accept message, a direct link modification accept message, a direct link RRC reconfiguration complete message, or an SL DRX configuration response message.

28. The method according to claim 24, wherein in a case that the feedback information meets a first condition, after transmitting, to the first terminal, the feedback information for the first information, the method further comprises:
receiving second information transmitted by the first terminal, wherein the second information is used for indicating that SL DRX configuration negotiation between the first terminal and the second terminal fails; wherein
the first condition comprises any one of the following:
that the feedback information comprises the M index values, and the first parameter in the first SL DRX configuration, and the first parameter is a parameter that is in the first SL DRX configuration and that is modified by the second terminal;
that the K sets of SL DRX configuration comprised in the feedback information are obtained by the second terminal by modifying SL DRX configuration in the N sets; or
that the K sets of SL DRX configuration comprised in the feedback information are SL DRX configuration other than the N sets of SL DRX configuration.

29. The method according to claim 18, wherein the feedback information indicates rejection of the N sets of SL DRX configuration.

30. The method according to claim 28, wherein the feedback information is carried in any one of the following: a direct link establishment reject message, a direct link modification reject message, a direct link RRC reconfiguration failure message, or an SL DRX configuration reject message.

31. The method according to claim 29, wherein after transmitting, to the first terminal, the feedback information for the first information, the method further comprises:
receiving second information transmitted by the first terminal, wherein the second information is used for indicating that SL DRX configuration negotiation between the first terminal and the second terminal fails.

32. The method according to claim 28 or 31, wherein the second information is carried in a direct link release request message.

33. The method according to claim 18, wherein before transmitting, to the first terminal, the feedback information for the first information, the method further comprises:
generating the feedback information based on third information, wherein the third information is used for indicating at least one of the following: an upper threshold of SL DRX active time duration, and a lower threshold of SL DRX active time duration.

34. A DRX determining apparatus, wherein the DRX determining apparatus comprises:
a first transmitting module, configured to transmit first information to a second terminal, wherein the first information is used for indicating N sets of sidelink SL DRX configuration, and N is a positive integer; and
a first receiving module, configured to receive feedback information transmitted by the second terminal for the first information.

35. The DRX determining apparatus according to claim 34, wherein the first information is carried in any one of the following: a direct link establishment request message, a direct link modification request message, a direct link radio resource control RRC reconfiguration message, and an SL DRX configuration request message.

36. The DRX determining apparatus according to claim 34, wherein the feedback information comprises any one of the following:
M index values;
M index values, and a first parameter in first SL DRX configuration; or
K sets of SL DRX configuration, wherein
the M index values and M sets of SL DRX configuration in the N sets of SL DRX configuration are in a one-to-one correspondence, the first SL DRX configuration comprises at least one set of SL DRX configuration in the M sets of SL DRX configuration, M is a positive integer less than or equal to N, and K is a positive integer.

37. The DRX determining apparatus according to claim 36, wherein the feedback information is carried in any one of the following: a direct link establishment accept message, a direct link modification accept message, a direct link RRC reconfiguration complete message, or an SL DRX configuration response message.

38. The DRX determining apparatus according to claim 36, wherein in a case that the feedback information meets a first condition, the DRX determining apparatus further comprises:
a first execution module, configured to perform a first operation in a case that a first terminal rejects the feedback information, wherein
the first condition comprises any one of the following:
that the feedback information comprises the M index values, and the first parameter in the first SL DRX configuration, and the first parameter is a parameter that is in the first SL DRX configuration and that is modified by the second terminal;
that the K sets of SL DRX configuration comprised in the feedback information are obtained by the second terminal by modifying SL DRX configuration in the N sets; or
that the K sets of SL DRX configuration comprised in the feedback information are SL DRX configuration other than the N sets of SL DRX configuration; and
the first operation comprises any one of the following:
transmitting second information to the second terminal, wherein the second information is used for indicating that SL DRX configuration negotiation between the first terminal and the second terminal fails;
setting a direct link to a DRX inactive state; or
triggering SL DRX configuration renegotiation between the first terminal and the second terminal.

39. The DRX determining apparatus according to claim 34, wherein the feedback information indicates rejection of the N sets of SL DRX configuration.

40. The DRX determining apparatus according to claim 39, wherein the feedback information is carried in any one of the following: a direct link establishment reject message, a direct link modification reject message, a direct link RRC reconfiguration failure message, or an SL DRX configuration reject message.

41. The DRX determining apparatus according to claim 39, wherein the DRX determining apparatus further comprises:
a second execution module, configured to perform a second operation, wherein
the second operation comprises any one of the following:
transmitting second information to the second terminal, wherein the second information is used for indicating that SL DRX configuration negotiation between a first terminal and the second terminal fails;
setting a direct link to a DRX inactive state; or
triggering SL DRX configuration renegotiation between the first terminal and the second terminal.

42. The DRX determining apparatus according to claim 38 or 41, wherein the second information is carried in a direct link release request message.

43. A DRX determining apparatus, wherein the DRX determining apparatus comprises:
a second receiving module, configured to receive first information transmitted by a first terminal, wherein the first information is used for indicating N sets of sidelink SL DRX configuration, and N is a positive integer; and
a second transmitting module, configured to transmit, to the first terminal, feedback information for the first information.

44. The DRX determining apparatus according to claim 43, wherein the first information is carried in any one of the following: a direct link establishment request message, a direct link modification request message, a direct link radio resource control RRC reconfiguration message, and an SL DRX configuration request message.

45. The DRX determining apparatus according to claim 43, wherein the feedback information comprises any one of the following:
M index values;
M index values, and a first parameter in first SL DRX configuration; or
K sets of SL DRX configuration, wherein
the M index values and M sets of SL DRX configuration in the N sets of SL DRX configuration are in a one-to-one correspondence, the first SL DRX configuration comprises at least one set of SL DRX configuration in the M sets of SL DRX configuration, M is a positive integer less than or equal to N, and K is a positive integer.

46. The DRX determining apparatus according to claim 45, wherein the feedback information is carried in any one of the following: a direct link establishment accept message, a direct link modification accept message, a direct link RRC reconfiguration complete message, or an SL DRX configuration response message.

47. The DRX determining apparatus according to claim 45, wherein in a case that the feedback information meets a first condition, the DRX determining apparatus further comprises:
a third receiving module, configured to receive second information transmitted by the first terminal, wherein second information is used for indicating that SL DRX configuration negotiation between the first terminal and a second terminal fails;
the first condition comprises any one of the following:
that the feedback information comprises the M index values, and the first parameter in the first SL DRX configuration, and the first parameter is a parameter that is in the first SL DRX configuration and that is modified by the second terminal;
that the K sets of SL DRX configuration comprised in the feedback information are obtained by the second terminal by modifying SL DRX configuration in the N sets; or
that the K sets of SL DRX configuration comprised in the feedback information are SL DRX configuration other than the N sets of SL DRX configuration.

48. The DRX determining apparatus according to claim 43, wherein the feedback information indicates rejection of the N sets of SL DRX configuration.

49. The DRX determining apparatus according to claim 48, wherein the feedback information is carried in any one of the following: a direct link establishment reject message, a direct link modification reject message, a direct link RRC reconfiguration failure message, or an SL DRX configuration reject message.

50. The DRX determining apparatus according to claim 48, wherein the DRX determining apparatus further comprises:
a fourth receiving module, configured to receive second information transmitted by the first terminal, wherein the second information is used for indicating that SL DRX configuration negotiation between the first terminal and a second terminal fails.

51. The DRX determining apparatus according to claim 47 or 50, wherein the second information is carried in a direct link release request message.

52. A terminal, comprising a processor, a memory, and a program or instructions stored in the memory and executable on the processor, wherein when the program or the instructions are executed by the processor, steps of the DRX determining method according to any one of claims 1 to 17 are implemented, or steps of the DRX determining method according to any one of claims 18 to 33 are implemented.

53. A readable storage medium, wherein the readable storage medium stores a program or instructions, and when the program or the instructions are executed by a processor, steps of the DRX determining method according to any one of claims 1 to 17 are implemented, or steps of the DRX determining method according to any one of claims 18 to 33 are implemented.

54. A chip, comprising a processor and a communications interface, wherein the communications interface is coupled to the processor, and the processor is configured to run a program or instructions, to implement steps of the DRX determining method according to any one of claims 1 to 17, or implement steps of the DRX determining method according to any one of claims 18 to 33.

55. A program product, wherein the program product is stored in a non-volatile storage medium, and the program product is executed by at least one processor to implement steps of the DRX determining method according to any one of claims 1 to 17, or implement steps of the DRX determining method according to any one of claims 18 to 33.
